(19) Europäisches Patentamt
European Patent Office
Office européen des brevets

(11) EP 4 281 499 B1

(12) EUROPEAN PATENT SPECIFICATION

(45) Date of publication and mention of the grant of the patent:
**11.03.2026 Bulletin 2026/11**

(21) Application number: **22702198.7**

(22) Date of filing: **20.01.2022**

(51) International Patent Classification (IPC):
***C08L 23/14*** *(2006.01)* ***C08K 7/14*** *(2006.01)*
***C08L 23/08*** *(2025.01)* ***C08F 210/16*** *(2006.01)*
***C08F 210/06*** *(2006.01)* ***C08F 4/659*** *(2006.01)*

(52) Cooperative Patent Classification (CPC):
(C-Sets available)
**C08F 210/06; C08L 23/14;** C08F 4/65912;
C08F 4/65916; C08F 2420/07; C08L 2207/02
(Cont.)

(86) International application number:
**PCT/EP2022/051206**

(87) International publication number:
**WO 2022/157231 (28.07.2022 Gazette 2022/30)**

# (54) FIBER REINFORCED POLYPROPYLENE COMPOSITION

FASERVERSTÄRKTE POLYPROPYLENZUSAMMENSETZUNG

COMPOSITION POLYMÈRE RENFORCÉE PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2021 EP 21152957**
**27.01.2021 EP 21153756**

(43) Date of publication of application:
**29.11.2023 Bulletin 2023/48**

(73) Proprietor: **Borealis GmbH**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **GRESTENBERGER, Georg**
  **4021 Linz (AT)**
- **LUMMERSTORFER, Thomas**
  **4021 Linz (AT)**

(74) Representative: **Maiwald GmbH**
**Elisenhof**
**Elisenstraße 3**
**80335 München (DE)**

(56) References cited:
**EP-A1- 3 461 860** **EP-A1- 3 495 423**
**WO-A1-2020/220255**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/65927;**
**C08L 23/14, C08K 7/14, C08L 23/08, C08L 51/06;**
**C08L 23/14, C08K 7/14, C08L 23/0815,**
**C08L 51/06;**
C08F 110/06, C08F 2500/12;
C08F 110/06, C08F 2500/12, C08F 2500/35;
C08F 210/06, C08F 4/6492;
C08F 210/06, C08F 210/16, C08F 2500/12,
C08F 2500/27, C08F 2500/32, C08F 2500/34,
C08F 2500/35, C08F 2500/30, C08F 2500/31,
C08F 2500/17, C08F 2500/33;
C08F 210/06, C08F 210/16, C08F 2500/12,
C08F 2500/35, C08F 2500/17, C08F 2500/33,
C08F 2500/34, C08F 2500/30, C08F 2500/31,
C08F 2500/32

## Description

The present invention is directed to a fiber reinforced composition (C) comprising a heterophasic polypropylene composition (HECO), fibers (F) and an adhesion promoter (AP) as well as an article comprising said fiber reinforced composition (C).

Fiber reinforced materials are widely used in various applications, especially in the engineering area, where higher stiffness and good impact resistance are seen as benefits (e.g. EP3495423A1).

Polypropylene is one of the most popular base polymers due to its diversity, low cost and lower density. It can fulfill most of the target properties. Polypropylene prepared in the presence of metallocene catalysts is a promising candidate due to extra benefits such as controlled molecular weight distribution, good comonomer incorporation and low emissions. However, due to the nature of the compounds, the tensile strength and elongation at break are often impaired in case of high filling ratios.

Accordingly, there is a need in the art for a fiber reinforced polypropylene composition featured by excellent heat deflection properties and low emissions while the tensile strength and elongation at break remain on a high level.

Therefore, it is an object of the present invention to provide a fiber reinforced polypropylene composition with good mechanical properties which is preferably based on a polypropylene prepared in the presence of a metallocene catalyst.

Hence, the present invention is directed to a fiber reinforced composition (C), comprising

a) 55.0 to 95.0 wt.-% of a heterophasic polypropylene composition (HECO), comprising

i) a matrix being a propylene homo- or copolymer (PP) having an amount of 1,2 erythro regio-defects of at least 0.4 mol-% and a comonomer content equal or below 8.5 mol-%, and
ii) an elastomeric ethylene copolymer (E) being dispersed in said matrix,

b) 5.0 to 45.0 wt.-% of fibers (F), and
c) optionally 0.1 to 5.0 wt.-% of an adhesion promoter (AP),

based on the overall weight of the fiber reinforced composition (C),
wherein the fiber reinforced composition (C) has a melt flow rate $MFR_2$ (230 °C, 2.16 kg) determined according to ISO 1133 in the range of 1.0 to 60.0 g/10 min.

A preferred embodiment of the invention provides a fiber reinforced composition (C), comprising

a) 55.0 to 95.0 wt.-% of a heterophasic polypropylene composition (HECO), comprising

i) a matrix being a propylene copolymer (cPP) having an amount of 1,2 erythro regio-defects of at least 0.4 mol-% and a comonomer content equal or below 8.5 mol-%, and
ii) an elastomeric ethylene copolymer (E) being dispersed in said matrix,

b) 5.0 to 45.0 wt.-% of fibers (F), and
c) optionally 0.1 to 5.0 wt.-% of an adhesion promoter (AP),

based on the overall weight of the fiber reinforced composition (C),
wherein the fiber reinforced composition (C) has a melt flow rate $MFR_2$ (230 °C, 2.16 kg) determined according to ISO 1133 in the range of 1.0 to 60.0 g/10 min.

According to one embodiment of the present invention, the heterophasic polypropylene composition (HECO) comprises

i) 60.0 to 95.0 wt.-% of the matrix being the propylene homo- or copolymer (PP), and
ii) 5.0 to 40.0 wt.-% of the elastomeric ethylene copolymer (E),

based on the overall weight of the heterophasic copolymer (HECO).

According to a further embodiment of the present invention, the elastomeric ethylene copolymer (E) has an ethylene content in the range of 15.0 to 85.0 wt.-%, based on the overall weight of the elastomeric ethylene copolymer (E).

According to another embodiment of the present invention, the heterophasic polypropylene composition (HECO) has a melting temperature Tm determined according to differential scanning calorimetry (DSC) in the range of 130 to 165

°C.

According to one embodiment of the present invention, the heterophasic polypropylene composition (HECO) has an intrinsic viscosity (IV) measured according to ISO 1628/1 (at 135 °C in decalin) of the soluble fraction (SF) determined according to CRYSTEX QC in the range of 1.8 to 3.0 dl/g.

According to a further embodiment of the present invention, the fibers (F) are glass fibers (GF), preferably short glass fibers (SGF) having

i) an average length of 2.0 to 10.0 mm, and/or
ii) an average diameter of 5 to 20 μm.

According to another embodiment of the present invention, the adhesion promoter (AP) is a polar modified polypropylene (PM-PP) being a propylene homo- or copolymer grafted with maleic anhydride having a melt flow rate $MFR_2$ (230 °C, 2.16 kg) determined according to ISO 1133 of at least 20.0 g/10 min.

According a first embodiment of the present invention, the propylene homo- or copolymer (PP) is a propylene homopolymer (hPP), and the elastomeric ethylene polymer (E) is a copolymer of ethylene and propylene.

According to the first embodiment of the present invention, the propylene homopolymer (hPP) has a melting temperature Tm determined according to differential scanning calorimetry (DSC) in the range of 140 to 160 °C.

According to the first embodiment of the present invention, the heterophasic polypropylene composition (HECO) has a comonomer content in the range of 2.2 to 8.7 mol-%.

It is especially preferred that the heterophasic polypropylene composition (HECO) according to the first embodiment of the present invention has

i) a xylene cold soluble (XCS) content determined at 25 °C according ISO 16152 in the range of 5.0 to 35.0 wt.-%, based on the overall weight of the heterophasic polypropylene composition (HECO), and/or
ii) an ethylene content of the xylene cold soluble (XCS) fraction in the range of 20.9 to 44.7 mol-%.
and/or
ii) a soluble fraction (SF) determined according to CRYSTEX QC in the range of 5.0 to 35.0 wt.-%, based on the overall weight of the heterophasic polypropylene composition (HECO), and/or
iv) an ethylene content of the soluble fraction (SF) determined according to CRYSTEX QC in the range of 20.9 to 44.7 mol-%.

According to the first embodiment of the present invention, the heterophasic polypropylene composition (HECO) has a melt flow rate $MFR_2$ (230 °C, 2.16 kg) determined according to ISO 1133 in the range of 20.0 to 100 g/10 min.

According to the first embodiment of the present invention, the fiber reinforced composition (C) has a tensile modulus determined according to ISO 527-1A in the range of 3000 to 6000 MPa, and/or an elongation at break determined according to ISO 527-2 of more than 3.0 %.

According to a second embodiment of the present invention, the propylene homo- or copolymer (PP) is a propylene copolymer (cPP) copolymer of propylene and ethylene, preferably having an ethylene content of 2.2 to 8.5 mol-%, and the elastomeric ethylene copolymer (E) is a copolymer of ethylene and a $C_4$ to $C_{12}$ $\alpha$-olefin, preferably 1-octene, preferably having an ethylene content of 55.0 to 85.0 wt.-%, based on the overall weight of elastomeric ethylene copolymer (E).

According to the second embodiment of the present invention, the propylene copolymer (cPP) has a melt flow rate $MFR_2$ (230 °C, 2.16 kg) determined according to ISO 1133 in the range of 5.0 to 20.0 g/10 min, and/or the elastomeric ethylene copolymer (E) has a melt flow rate MFR (190 °C, 2.16 kg) determined according to ISO 1133 in the range of 0.8 to 20.0 g/10 min and/or a density determined according to ISO 1183-187 in the range of 860 to 890 $kg/m^3$.

According to the second embodiment of the present invention, the fiber reinforced composition (C) has a melt flow rate $MFR_2$ (230 °C, 2.16 kg) determined according to ISO 1133 in the range of 1.0 to 10.0 g/10 min.

According to a the second embodiment of the present invention, the fiber reinforced composition (C) has a tensile modulus determined according to ISO 527-1A in the range of 2500 to 5500 MPa, and/or an elongation at break determined according to ISO 527-2 of more than 10.0 %.

According to one embodiment of the present invention, the fiber reinforced composition (C) further comprises up to 20.0 wt.-% of a low density polyethylene (LDPE) homo- or copolymer having a density determined according to ISO 1183-187 of more than 900 $kg/m^3$ and comprising ethylene and optionally vinyl acetate.

According to one embodiment of the present invention, the propylene homo- or copolymer (PP) is obtained in the presence of a solid catalyst system (SCS) comprising a metallocene compound.

It is especially preferred that the metallocene compound has the formula (I)

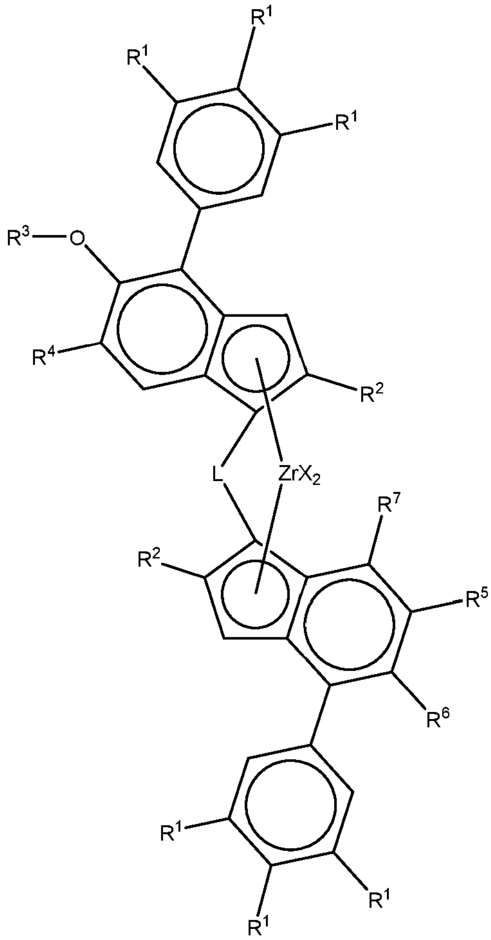

Formula (I)

wherein each X independently is a sigma-donor ligand,

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring, each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;

$R^7$ is H or a linear or branched $C_1$-$C_6$-alkyl group or an aryl or heteroaryl group having 6 to 20 carbon atoms optionally substituted by one to three groups $R^{11}$,

each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group.

The present invention is further directed to an article, comprising the fiber reinforced composition (C) as described above.

In the following, the fiber reinforced composition (C) is described in more detail.

**The fiber reinforced composition (C)**

The present invention is directed to a fiber reinforced composition (C) comprising a heterophasic polypropylene composition (HECO), fibers (F) and an adhesion promoter (AP).

In particular, the fiber reinforced composition (C) comprises

a) 55.0 to 95.0 wt.-%, preferably 55.0 to 90.0 wt.-%, more preferably 60.0 to 85.0 wt.-%, still more preferably 66.0 to 82.0 wt.-%, like 72.0 to 79.0 wt.-% of the heterophasic polypropylene composition (HECO), and
b) 5.0 to 45.0 wt.-%, preferably 10.0 to 40.0 wt.-%, more preferably 12.0 to 35.0 wt.-%, still more preferably 14.0 to 29 wt.-%, like 18.0 to 23.0 wt.-% of the fibers (F),

based on the overall weight of the fiber reinforced composition (C).

According to a preferred embodiment of the present invention, the fiber reinforced composition (C) further comprises an adhesion promoter (AP).

Therefore, it is preferred that the fiber reinforced composition (C) comprises

a) 55.0 to 94.9 wt.-%, preferably 55.0 to 90.0 wt.-%, more preferably 60.0 to 85.0 wt.-%, still more preferably 66.0 to 82.0 wt.-%, like 72.0 to 79.0 wt.-% of the heterophasic polypropylene composition (HECO),
b) 5.0 to 45.0 wt.-%, preferably 10.0 to 40.0 wt.-%, more preferably 12.0 to 35.0 wt.-%, still more preferably 14.0 to 29 wt.-%, like 18.0 to 23.0 wt.-% of the fibers (F), and
c) 0.1 to 5.0 wt.-%, preferably 0.3 to 4.8 wt.-%, more preferably 0.5 to 4.0 wt.-%, still more preferably 0.8 to 3.0 wt.-%, like 1.0 to 2.0 wt.-% of the adhesion promoter (AP),

based on the overall weight of the fiber reinforced composition (C).

The fiber reinforced composition (C) according to the invention may comprise additives (AD).

Accordingly, it is preferred that the fiber reinforced composition (C) according to the invention comprises, more preferably consists of,

a) 55.0 to 94.9 wt.-%, preferably 55.0 to 90.0 wt.-%, more preferably 60.0 to 85.0 wt.-%, still more preferably 66.0 to 82.0 wt.-%, like 72.0 to 79.0 wt.-% of the heterophasic polypropylene composition (HECO),
b) 5.0 to 45.0 wt.-%, preferably 10.0 to 40.0 wt.-%, more preferably 12.0 to 35.0 wt.-%, still more preferably 14.0 to 29 wt.-%, like 18.0 to 23.0 wt.-% of the fibers (F),
c) 0.1 to 5.0 wt.-%, preferably 0.3 to 4.8 wt.-%, more preferably 0.5 to 4.0 wt.-%, still more preferably 0.8 to 3.0 wt.-%, like 1.0 to 2.0 wt.-% of the adhesion promoter (AP), and
d) 0.01 to 2.5 wt.-% of additives (AD),

based on the overall weight of the fiber reinforced composition (C). The additives (AD) are described in more detail below.

Accordingly, it is preferred that the fiber reinforced composition (C) according to the invention comprises, more preferably consists of,

a) 55.0 to 94.9 wt.-% (e.g. 55.0 to 94.8 wt.%), preferably 55.0 to 90.0 wt.-%, more preferably 60.0 to 85.0 wt.-%, still more preferably 66.0 to 82.0 wt.-%, like 72.0 to 79.0 wt.-% of the heterophasic polypropylene composition (HECO),
b) 5.0 to 45.0 wt.-%, preferably 10.0 to 40.0 wt.-%, more preferably 12.0 to 35.0 wt.-%, still more preferably 14.0 to 29 wt.-%, like 18.0 to 23.0 wt.-% of the fibers (F),
c) 0.1 to 5.0 wt.-%, preferably 0.3 to 4.8 wt.-%, more preferably 0.5 to 4.0 wt.-%, still more preferably 0.8 to 3.0 wt.-%, like 1.0 to 2.0 wt.-% of the adhesion promoter (AP), and
d) 0.01 to 2.5 wt.-% of additives (AD),

based on the overall weight of the fiber reinforced composition (C), wherein the components a) to d) are selected to add up to 100 wt.%.

Further, the fiber reinforced composition (C) according to the invention may further comprise a low density polyethylene (LDPE).

Thus, according to another embodiment of the present invention, the fiber reinforced composition (C) comprises, more preferably consists of

a) 55.0 to 94.9 wt.-%, preferably 55.0 to 90.0 wt.-%, more preferably 60.0 to 85.0 wt.-%, still more preferably 66.0 to

82.0 wt.-%, like 72.0 to 79.0 wt.-% of the heterophasic polypropylene composition (HECO),
c) 5.0 to 25.0 wt.-%, preferably 10.0 to 22.0 wt.-%, more preferably 12.0 to 35.0 wt.-%, still more preferably 14.0 to 29 wt.-%, like 18.0 to 23.0 wt.-% of the fibers (F),
d) 0.1 to 5.0 wt.-%, preferably 0.3 to 4.8 wt.-%, more preferably 0.5 to 4.0 wt.-%, still more preferably 0.8 to 3.0 wt.-%, like 1.0 to 2.0 wt.-% of the adhesion promoter (AP),
e) 0.0 to 20.0 wt.-%, preferably 5.0 to 18.0 wt.-%, more preferably 12.0 to 17.0 wt.-%, still more preferably 13.0 to 16.0 wt.-% of the low density polyethylene (LDPE), and
f) 0.01 to 2.5 wt.-% of additives (AD),

based on the overall weight of the fiber reinforced composition (C).
According to another embodiment of the present invention, the fiber reinforced composition (C) comprises, preferably consists of,

a) 55.0 to 94.9 wt.-% (e.g. 55.0 to 94.8 wt.%), preferably 55.0 to 90.0 wt.-%, more preferably 60.0 to 85.0 wt.-%, still more preferably 66.0 to 82.0 wt.-%, like 72.0 to 79.0 wt.-% of the heterophasic polypropylene composition (HECO),
c) 5.0 to 25.0 wt.-%, preferably 10.0 to 22.0 wt.-%, more preferably 12.0 to 35.0 wt.-%, still more preferably 14.0 to 29 wt.-%, like 18.0 to 23.0 wt.-% of the fibers (F),
d) 0.1 to 5.0 wt.-%, preferably 0.3 to 4.8 wt.-%, more preferably 0.5 to 4.0 wt.-%, still more preferably 0.8 to 3.0 wt.-%, like 1.0 to 2.0 wt.-% of the adhesion promoter (AP),
e) 0.0 to 20.0 wt.-%, preferably 5.0 to 18.0 wt.-%, more preferably 12.0 to 17.0 wt.-%, still more preferably 13.0 to 16.0 wt.-% of the low density polyethylene (LDPE), and
f) 0.01 to 2.5 wt.-% of additives (AD),

based on the overall weight of the fiber reinforced composition (C), wherein the components a) to d) are selected to add up to 100 wt.%.
Preferably, the fiber reinforced composition (C) of the invention does not comprise (a) further polymer(s) different to the heterophasic polypropylene composition (HECO), the adhesion promoter (AP) and the optional low density polyethylene (LDPE) in an amount exceeding 5.0 wt.-%, preferably in an amount exceeding 3.0 wt.-%, more preferably in an amount exceeding 2.5 wt.-%, based on the overall weight of the fiber reinforced composition (C). One additional polymer which may be present in such low amounts is a polyethylene which is a reaction by-product obtained by the preparation of the heterophasic polypropylene composition (HECO). Accordingly, it is in particular appreciated that the fiber reinforced composition (C) contains only the heterophasic polypropylene composition (HECO), the adhesion promoter (A), the optional low density polyethylene (LDPE) and optionally polyethylene in amounts as mentioned in this paragraph as polymeric compounds.
The fiber reinforced composition (C) has a melt flow rate $MFR_2$ (230 °C, 2.16 kg) determined according to ISO 1133 in the range of 1.0 to 60.0 g/10 min, more preferably in the range of 1.2 to 40.0 g/10 min, still more preferably in the range of 2.0 to 35.0 g/10 min, like in the range of 2.5 to 29.0 g/10 min.
According to one preferred embodiment, the fiber reinforced composition (C) has a melt flow rate $MFR_2$ (230 °C, 2.16 kg) determined according to ISO 1133 in the range of 1.0 to 10.0 g/10 min (e.g. 2.0 to 10.0 g/10 min or 2.5 to 10.0 g/10 min). A range of the melt flow rate of 1.0 to 10.0 g/10 min (and the subranges) are particularly preferred in combination with the "second embodiment of the invention" as defined herein.
Regarding the mechanical properties, it is preferred that the fiber reinforced composition (C) has tensile modulus determined according to ISO 527-1A of at least 2000 MPa, more preferably at least 2200 MPa, still more preferably at least 2300 MPa, like at least 2400 MPa and/or a tensile strength determined according to ISO 527-2 of at least 40 MPa, more preferably at least 42 MPa, still more preferably at least 45 MPa, like at least 50 MPa.
Additionally or alternatively to the previous paragraph, it is preferred that the fiber reinforced composition has an elongation at break determined according to ISO 527-2 at 23 °C of at least 3.0 %, more preferably at least 3.2 %, still more preferably at least 3.4 %.
The fiber reinforced composition (C) is preferably obtained by melt blending the heterophasic polypropylene composition (HECO), the fibers (F), optionally the adhesion promoter (AP), optionally the additives (AD) and optionally the low density polyethylene (LDPE).
In the following, the heterophasic polypropylene composition (HECO), the fibers (F), the adhesion promoter (AP) and the low density polyethylene (LDPE) are described in more detail.

## The heterophasic polypropylene composition (HECO)

The inventive fiber reinforced composition (C) comprises a heterophasic polypropylene composition (HECO).
The heterophasic polypropylene composition (HECO) according to this invention comprises a matrix being the

propylene homo- or copolymer (PP) and dispersed therein an elastomeric ethylene copolymer (E). Thus the matrix contains (finely) dispersed inclusions being not part of the matrix and said inclusions contain the elastomeric ethylene copolymer (E). The term inclusion indicates that the matrix and the inclusion form different phases within the heterophasic polypropylene composition (HECO). The presence of second phases or the so called inclusions are for instance visible by high resolution microscopy, like electron microscopy or atomic force microscopy, or by dynamic mechanical thermal analysis (DMTA). Specifically, in DMTA the presence of a multiphase structure can be identified by the presence of at least two distinct glass transition temperatures.

Accordingly, the heterophasic polypropylene composition (HECO) according to this invention preferably comprises

(a) the (semi)crystalline propylene homo- or copolymer (PP) as the matrix and
(b) the elastomeric ethylene copolymer (E).

In particular, it is preferred that the heterophasic polypropylene composition (HECO) comprises, more preferably consists of,

(a) 60.0 to 95.0 wt.-%, more preferably 61.0 to 92.0 wt.-%, of the matrix being the propylene homo- or copolymer (PP), and
(b) 5.0 to 40.0 wt.-%, more preferably 8.0 to 39.0 wt.-%, of the elastomeric ethylene copolymer (E),

based on the overall weight of the heterophasic polypropylene composition (HECO).

It is preferred that the heterophasic polypropylene composition (HECO) according to this invention has at least two distinct glass transition temperatures Tg(1) and Tg(2). In particular, it is preferred that the first glass transition temperature Tg(1) is below -15 °C, more preferably below -25 °C. Additionally, it is preferred that the second glass transition temperature Tg(2) is at least -5°C, more preferably at least -4°C.

Preferably, the heterophasic polypropylene composition (HECO) has a melt flow rate $MFR_2$ (230 °C, 2.16 kg) determined according to ISO 1133 in the range of 5.0 to 100 g/10 min., more preferably in the range of 6.0 to 95.0 g/10 min, still more preferably in the range of 7.0 to 87.0 g/10 min, like in the range of 8.0 to 80.0 g/10 min.

Further, it is preferred that the heterophasic polypropylene composition (HECO) has an intrinsic viscosity (IV) measured according to ISO 1628/1 (at 135 °C in decalin) of the soluble fraction (SF) determined according to CRYSTEX QC the range of 1.8 to 3.0 dl/g, more preferably in the range of 2.5 to 3.0 dl/g.

Preferably, it is desired that the heterophasic polypropylene composition (HECO) is thermo mechanically stable. Accordingly, it is appreciated that the heterophasic polypropylene composition (HECO) has a melting temperature Tm determined according to differential scanning calorimetry (DSC) in the range of 130 to 165 °C, more preferably in the range of 132 to 159 °C, still more preferably in the range of 135 to 158 °C, like in the range of 139 to 157 °C.

The propylene homo- or copolymer (PP) has an amount of 1,2 erythro regio-defects of at least 0.4 mol-% (preferably in the range of 0.4 to 1.2 mol-%). Without being bound to theory, a high amount of misinsertions of propylene within the polymer chain indicates that the propylene homo- or copolymer (PP) is produced in the presence of a single site catalyst, preferably a metallocene catalyst. It is known in the art that e.g. propylene homo- or copolymers which are produced in the presence of a Ziegler-Natta catalyst can have an amount of 1,2 erythro regio-defects of well below 0.4 mol-%, and are often essentially free of 1,2 erythro regio-defects.

The heterophasic polypropylene composition (HECO) comprises apart from propylene also comonomers. Preferably the heterophasic polypropylene composition (HECO) comprises apart from propylene ethylene and/or $C_4$ to $C_{12}$ $\alpha$-olefins.

Accordingly, the term "propylene copolymer" according to this invention is understood as a polypropylene comprising, preferably consisting of, units derivable from

(a) propylene
and
(b) ethylene and/or $C_4$ to $C_{12}$ $\alpha$-olefins.

Furthermore, the term "ethylene copolymer" according to this invention is understood as a polyethylene comprising, preferably consisting of, units derivable from

(a) ethylene
and
(b) $C_3$ to $C_{12}$ $\alpha$-olefins.

Thus, the propylene homo- or copolymer (PP), i.e. the matrix of the heterophasic polypropylene composition (HECO), can comprise monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. The elastomeric ethylene copolymer (E) can comprise monomers copolymerizable with ethylene, for example comonomers such as $C_3$ to $C_{12}$ $\alpha$-olefins, in particular propylene, 1-butene, 1-hexene and/or 1-octene. More specifically, the heterophasic polypropylene composition (HECO) of this invention comprises - apart from propylene and ethylene - units derivable from 1-butene, 1-hexene and/or 1-octene.

Accordingly, the propylene homo- or copolymer (PP) according to the invention can be a propylene homopolymer or a propylene copolymer.

In particular, it is preferred that the propylene homo- or copolymer (PP) has a comonomer content, preferably ethylene content, equal or below 8.5 mol-%, more preferably in the range of 0.0 to 8.3 mol-%, still more preferably in the range of 0.0 to 8.0 mol-%, like in the range of 0.0 to 6.0 mol-%.

The elastomeric ethylene copolymer (E) according to the present invention comprises monomers copolymerizable with ethylene for example comonomers such as $C_3$ to $C_{12}$ $\alpha$-olefins, in particular propylene, 1-butene, 1-hexene and/or 1-octene. Preferably, the elastomeric ethylene copolymer (E) has an ethylene content in the range of 15.0 to 85.0 wt.-%, more preferably in the range of 18.0 to 82.0 wt.-%, still more preferably in the range of 19.0 to 79.0 wt.-%, like in the range of 20.0 to 76.0 wt.-%, based on the overall weight of the elastomeric ethylene copolymer (E).

According to a first embodiment of the present invention, it is preferred that the propylene homo- or copolymer (PP) is a propylene homopolymer (hPP).

The expression "propylene homopolymer" as used herein relates to a polypropylene that consists substantially, i.e. of at least 99.0 wt.-%, more preferably of at least 99.5 wt.-%, still more preferably of at least 99.8 wt.-%, like of at least 99.9 wt.-%, of propylene units. In another embodiment only propylene units are detectable, i.e. only propylene has been polymerized.

Thus, according to the first embodiment of the present invention, the heterophasic polypropylene composition (HECO) comprises

a) a matrix being the propylene homopolymer (hPP), and
b) the elastomeric ethylene copolymer (E).

The elastomeric ethylene copolymer (E) according to the first embodiment of the present invention comprises monomers copolymerizable with ethylene, for example comonomers such as $C_3$ to $C_{12}$ $\alpha$-olefins, in particular propylene, 1-butene, 1-hexene and/or 1-octene. According to the first embodiment of the present invention, is particularly preferred that the elastomeric ethylene copolymer (E) is a copolymer of ethylene and propylene. In other words, the elastomeric ethylene copolymer (E) according to the first embodiment of the present invention comprises units derivable from ethylene and propylene only.

Accordingly, it is preferred that the heterophasic polypropylene composition (HECO) according to the first embodiment of the present invention comprises units derivable from ethylene and propylene only.

Preferably, the heterophasic polypropylene composition (HECO) according to the first embodiment of the present invention has a comonomer content, preferably ethylene content, in the range of 2.2 to 8.7 mol-%, more preferably in the range of 2.7 to 5.8 mol-%, still more preferably in the range of 2.9 to 4.4 mol-%.

Further, it is preferred that the heterophasic polypropylene composition (HECO) according to the first embodiment of the present invention has a xylene cold soluble (XCS) content determined at 25 °C according ISO 16152 in the range of 5.0 to 35.0 wt.-%, more preferably in the range of 7.0 to 20.0 wt.-%, still more preferably in the range of 9.0 to 15.0 wt.-%, like in the range of 10.0 to 12.0 wt.-%, based on the overall weight of the heterophasic polypropylene composition (HECO) according to the first embodiment of the present invention.

Additionally or alternatively, it is preferred that said xylene cold soluble (XCS) fraction of the heterophasic polypropylene composition (HECO) according to the first embodiment of the present invention has a comonomer content, preferably ethylene content, in the range of 20.9 to 44.7 mol-%, more preferably in the range of 25.0 to 40.0 mol-%, still more preferably in the range of 28.0 to 38.0 mol-%, like in the range of 30.0 to 34.0 mol-%.

Preferably, the heterophasic polypropylene composition (HECO) according to the first embodiment of the present invention has an intrinsic viscosity (IV) measured according to ISO 1628/1 (at 135 °C in decalin) of the xylene cold soluble (XCS) fraction in the range of 1.8 to 3.0 dl/g, more preferably in the range of 2.2 to 2.8 dl/g, still more preferably in the range of 2.3 to 2.7 dl/g.

Additionally or alternatively to the previous paragraphs, it is appreciated that the heterophasic polypropylene composition (HECO) according to the first embodiment of the present invention preferably has a soluble fraction (SF) determined according to CRYSTEX QC in the range of of 5.0 to 35.0 wt.-%, more preferably in the range of 7.0 to 20.0 wt.-%, still more preferably in the range of 9.0 to 15.0 wt.-%, like in the range of 10.0 to 12.0 wt.-%, based on the overall weight of the heterophasic polypropylene composition (HECO) according to the first embodiment of the present invention.

The comonomer content, preferably ethylene content of the soluble fraction (SF) determined according to CRYSTEX QC of the heterophasic polypropylene composition (HECO) according to the first embodiment of the present invention is preferably in the range of 20.9 to 44.7 mol-%, more preferably in the range of 25.0 to 40.0 mol-%, still more preferably in the range of 28.0 to 38.0 mol-%, like in the range of 30.0 to 34.0 mol-%.

Preferably, the heterophasic polypropylene composition (HECO) according to the first embodiment of the present invention has an intrinsic viscosity (IV) measured according to ISO 1628/1 (at 135 °C in decalin) of the soluble fraction (SF) determined according to CRYSTEX QC in the range of 1.8 to 3.0 dl/g, more preferably in the range of 2.2 to 2.8 dl/g, still more preferably in the range of 2.3 to 2.7 dl/g.

It is preferred that the heterophasic polypropylene composition (HECO) according to the first embodiment of the present invention has a moderate melt flow rate. Therefore, the heterophasic polypropylene composition (HECO) according to the first embodiment of the present invention preferably has a melt flow rate $MFR_2$ (230 °C, 2.16 kg) determined according to ISO 1133 in the range of 20.0 to 100.0 g/10 min, more preferably in the range of 45.0 to 95.0 g/10 min, still more preferably in the range of 56.0 to 90.0 g/10 min, like in the range of 70.0 to 80.0 g/10 min.

Further, it is preferred that the heterophasic polypropylene composition (HECO) according to the first embodiment of the present invention has a melting temperature Tm determined according to differential scanning calorimetry (DSC) in the range of 130 to 165 °C, more preferably in the range of 135 to 160 °C, still more preferably in the range of 145 to 159 °C, like in the range of 152 to 157 °C.

Regarding the mechanical properties, it is preferred that the heterophasic polypropylene composition (HECO) according to the first embodiment of the present invention has a flexural modulus determined according to ISO 178 in the range of 500 to 2000 MPa, more preferably in the range of 800 to 1900 MPa, still more preferably in the range of 1000 to 1500 MPa, like in the range of 1100 to 1300 MPa.

Additionally or alternatively to the previous paragraph, it is preferred that the heterophasic polypropylene composition (HECO) according to the first embodiment of the present invention has a Charpy notched impact strength determined according to ISO 179/1eA at 23 °C of at least 1.5 $kJ/m^2$, more preferably of at least 2.5 $kJ/m^2$, still more preferably of at least 3.0 $kJ/m^2$, like at least 3.5 $kJ/m^2$, and/or a Charpy notched impact strength determined according to ISO 179/1eA at -20 °C of at least 0.5 $kJ/m^2$, more preferably at least 0.8 $kJ/m^2$, still more preferably at least 1.3 $kJ/m^2$, like at least 1.7 $kJ/m^2$.

Further, it is preferred that the fiber reinforced composition (C) according to the first embodiment of the present invention has a tensile modulus determined according to ISO 527-1A in the range of 3000 to 6000 MPa, more preferably in the range of 3500 to 5800 MPa, still more preferably in the range of 4200 to 5300 MPa, like in the range of 4700 to 5000 MPa.

Additionally or alternatively, it is preferred that the fiber reinforced composition (C) according to the first embodiment of the present invention has an elongation at break determined according to ISO 527-2 of more than 3.0 %, more preferably more than 3.2 %, still more preferably more than 3.3 %, like more than 3.4 %.

The heterophasic polypropylene composition (HECO) according to the first embodiment of the present invention can be further defined by its individual components, i.e. the matrix being the propylene homopolymer (hPP) and the elastomeric ethylene copolymer (E) being a copolymer of ethylene and propylene.

The matrix being the propylene homopolymer (hPP) preferably has a melt flow rate $MFR_2$ (230 °C, 2.16 kg) determined according to ISO 1133 in the range of 30.0 to 200 g/10 min, more preferably in the range of 40.0 to 110 g/10 min, still more preferably in the range of 60.0 to 95.0 g/10 min, like in the range of 75.0 to 85.0 g/10 min.

Preferably, the propylene homopolymer (hPP) has a melting temperature Tm determined according to differential scanning calorimetry (DSC) in the range of 140 to 160 °C, more preferably in the range of 142 to 159 °C, still more preferably in the range of 145 to 158 °C, like in the range of 147 to 157 °C.

The propylene homopolymer (hPP) has an amount of 1,2 erythro regio-defects of at least 0.4 mol-% which, as outlined above, indicates that the propylene homopolymer (PP) is produced in the presence of a single site catalyst, preferably a metallocene catalyst.

As described in more detail below, the heterophasic polypropylene composition (HECO) according to the first embodiment of the present invention is preferably obtained in a sequential process in the presence of a metallocene catalyst. Hence, it is particularly preferred that the propylene homopolymer (hPP) and the elastomeric ethylene copolymer (E) are prepared in a sequential process in the presence of a metallocene catalyst.

Thus, it is preferred that the elastomeric ethylene copolymer (E) according to the first embodiment of the present invention being copolymer of ethylene and propylene also has an amount of 1,2 erythro regio-defects of at least 0.4 mol-% (preferably in the range of 0.4 to 1.2 mol-%).

The heterophasic polypropylene composition (HECO) according to the first embodiment of the present of the present invention preferably comprises

i) 60.0 to 99.0 wt.-%, more preferably 75.0 to 98.0 wt.-%, still more preferably 80.0 to 95.0 wt.-%, like 85.0 to 90.0 wt.-% of the matrix being the propylene homopolymer (hPP), and

ii) 1.0 to 40.0 wt.-%, more preferably 2.0 to 25.0 wt.-%, still more preferably 5.0 to 20.0 wt.-%, like 10.0 to 15.0 wt.-%, of the elastomeric ethylene copolymer (E) being a copolymer of ethylene and propylene.

The heterophasic polypropylene composition (HECO) according to the first embodiment of the present of the present invention can be prepared by blending, preferably melt-blending the propylene homopolymer (hPP) and the elastomeric ethylene copolymer (E) together or by producing the propylene homopolymer (hPP) and the elastomeric ethylene copolymer (E) in a sequential process, the latter being preferred.

The process for the preparation of the heterophasic polypropylene composition (HECO) according to the first embodiment of the present of the present invention is preferably a sequential polymerization process comprising at least two reactors connected in series, wherein said process comprises the steps of

(A) polymerizing in a first reactor (R-1) being a slurry reactor (SR), preferably a loop reactor (LR), propylene, obtaining a first fraction of the propylene homopolymer (hPP) as defined in the instant invention,
(B) transferring said first fraction of the propylene homopolymer (hPP) of the first reactor (R-1) in a second reactor (R-2) being a gas phase reactor (GPR-1),
(C) feeding to said second reactor (R-2) propylene,
(D) polymerizing in said second reactor (R-2) and in the presence of the first fraction of the propylene homopolymer (hPP) propylene, obtaining a second fraction of the propylene homopolymer (hPP), said first and second fraction form the propylene homopolymer (hPP) of the invention,
(E) transferring said propylene homopolymer (hPP) of the second reactor (R-2) in a third reactor (R-3) being a gas phase reactor (GPR-2),
(F) feeding to said third reactor (R-3) propylene and a comonomer selected from ethylene and C4 to C12 $\alpha$-olefins, preferably ethylene,
(G) polymerizing in said third reactor (R-3) and in the presence of said propylene homopolymer (hPP) propylene and a comonomer selected from ethylene and C4 to C12 $\alpha$-olefins, preferably ethylene, obtaining the elastomeric ethylene copolymer (E) as defined in the instant invention, said propylene homopolymer (hPP) and said elastomeric ethylene copolymer (E) form the heterophasic polypropylene composition (HECO) as defined in the instant invention, wherein further

in the first reactor (R-1), second reactor (R-2) and third reactor (R-3) the polymerization takes place in the presence of a solid catalyst system (SCS).

The solid catalyst system (SCS) is defined in more detail below.

The term "sequential polymerization process" indicates that the heterophasic polypropylene composition (HECO) according to the first embodiment of the present of the present invention is produced in at least two reactors connected in series. More precisely the term "sequential polymerization process" indicates in the present application that the polymer of the first reactor (R-1) is directly conveyed with unreacted monomers to the second reactor

(R-2). Accordingly the decisive aspect of the present process is the preparation of the heterophasic polypropylene composition (HECO) in at least two different reactors, wherein the reaction material of the first reactor (R-1) is directly conveyed to the second reactor (R-2). Thus the present process comprises at least a first reactor (R-1) and a second reactor (R-2). In one specific embodiment the instant process consists of three polymerization reactors (R-1), (R-2) and (R-3). The term "polymerization reactor" shall indicate that the main polymerization takes place there. Thus in case the process consists of three polymerization reactors, this definition does not exclude the option that the overall process comprises for instance a pre-polymerization step in a pre-polymerization reactor. The term "consists of" is only a closing formulation in view of the main polymerization reactors.

The first reactor (R-1) is a slurry reactor (SR) and can be any continuous or simple stirred batch tank reactor or loop reactor operating in slurry. According to the present invention the slurry reactor (SR) is preferably a loop reactor (LR).

The second reactor (R-2), third reactor (R-3) and any subsequent reactors are gas phase reactors (GPR). Such gas phase reactors (GPR) can be any mechanically mixed or fluid bed reactors. Preferably the gas phase reactor(s) (GPR) comprise a mechanically agitated fluid bed reactor with gas velocities of at least 0.2 m/sec. Thus it is appreciated that the gas phase reactor (GPR) is a fluidized bed type reactor preferably with a mechanical stirrer.

The condition (temperature, pressure, reaction time, monomer feed) in each reactor is dependent on the desired product which is in the knowledge of a person skilled in the art. As already indicated above, the first reactor (R-1) is a slurry reactor (SR), like a loop reactor (LR), whereas the second reactor (R-2) and the third reactor (R-3) are a gas phase reactors (GPR-1) and (GPR-2). The subsequent reactors - if present - are also gas phase reactors (GPR).

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379, and WO 98/58976.

Preferably, in the instant process for producing the heterophasic polypropylene composition (HECO) as defined above the conditions for the first reactor (R-1), i.e. the slurry reactor (SR), like a loop reactor (LR), of step (A) may be as follows:

- the temperature is within the range of 40 °C to 110 °C, preferably between 60 °C and 100 °C, more preferably in the range of 65 to 90 °C,
- the pressure is within the range of 20 bar to 80 bar, preferably between 40 bar and 70 bar,
- hydrogen can be added for controlling the molar mass in a manner known per se.

Subsequently, the reaction mixture from step (A) is transferred to the second reactor (R-2), i.e. gas phase reactor (GPR-1), i.e. to step (D), whereby the conditions in step (D) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones.

In one embodiment of the process for producing the heterophasic polypropylene composition (HECO) the residence time in the slurry reactor (SR), e.g. loop (LR) is in the range 0.2 to 4.0 hours, e.g. 0.3 to 1.5 hours and the residence time in the gas phase reactor (GPR) will generally be 0.2 to 6.0 hours, like 0.5 to 4.0 hours.

If desired, the polymerization may be effected in a known manner under supercritical conditions in the first reactor (R-1), i.e. in the slurry reactor (SR), like in the loop reactor (LR).

The conditions in the third reactor (R-3), i.e. the second gas phase reactor (GPR-2) and any other subsequent gas phase reactors (GPR), if present, are similar to the second reactor (R-2).

The present process may also encompass a pre-polymerization prior to the polymerization in the first reactor (R-1). The pre-polymerization can be conducted in the first reactor (R-1), however it is preferred that the pre-polymerization takes place in a separate reactor, a so called pre-polymerization reactor.

The heterophasic polypropylene composition (HECO) according to the first embodiment of the present of the present invention according to the present invention is prepared in the presence of a solid catalyst system (SCS) comprising a transition metal compound.

It is particularly preferred that the solid catalyst system (SCS) is a metallocene catalyst comprises a metallocene complex, a co-catalyst system comprising a boron-containing co-catalyst and/or aluminoxane co-catalyst, and a silica support.

In particular, it is preferred that the metallocene catalyst comprises

(i) a metallocene complex of the general formula (I)

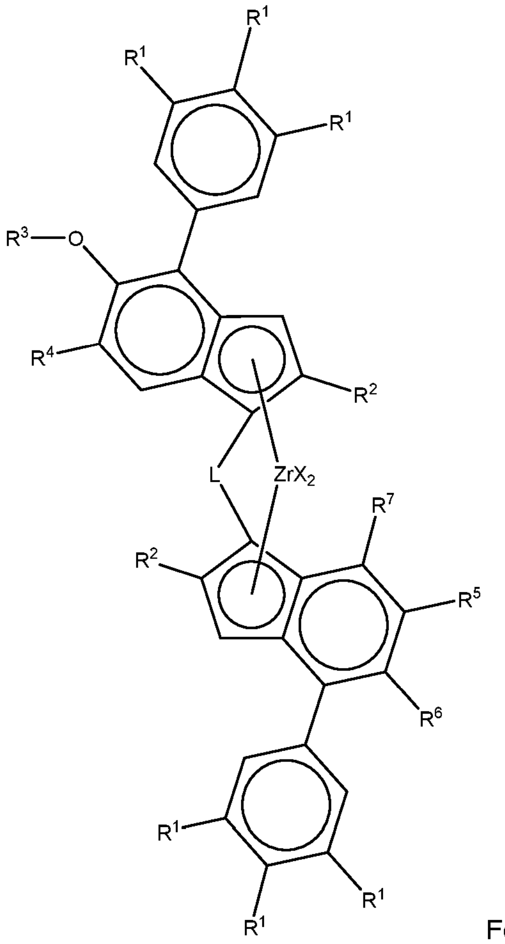

Formula (I)

wherein each X independently is a sigma-donor ligand,

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;

$R^7$ is H or a linear or branched $C_1$-$C_6$-alkyl group or an aryl or heteroaryl group having 6 to 20 carbon atoms optionally substituted by one to three groups $R^{11}$,

each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) a co-catalyst system comprising a boron containing co-catalyst and/or an aluminoxane co-catalyst, and
(iii) a silica support.

The term "sigma-donor ligand" is well understood by the person skilled in the art, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$, cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiment the anionic ligands "X" are identical and either halogen, like Cl, or methyl or benzyl.
A preferred monovalent anionic ligand is halogen, in particular chlorine (Cl).
Preferred metallocene complexes include:

rac-dimethylsilanediylbis[2-methyl-4-(3',5'-dimethylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-(4'-tertbutylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride, rac-anti-dimethylsilanediyl[2-methyl-4,8-bis-(4'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-5 ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tertbutylinden-1-yl] zirconium dichloride (II)

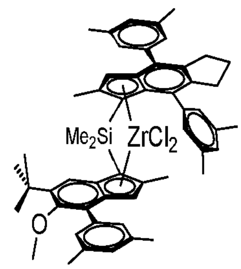

(II).

The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO 2002/02576, WO 2011/135004, WO 2012/084961, WO 2012/001052, WO 2011/076780, WO 2015/158790 and WO 2018/122134. Especially reference is made to WO 2019/179959, in which the most preferred catalyst of the present invention is described.
According to the present invention a co-catalyst system comprising a boron containing cocatalyst and/or an aluminoxane co-catalyst is used in combination with the above defined metallocene catalyst complex.
The aluminoxane co-catalyst can be one of formula (III):

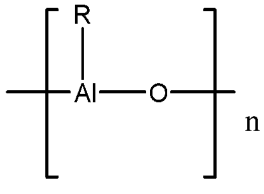

(III)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$C_{10}$ cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (III).

The preferred aluminoxane is methylaluminoxane (MAO). Since the aluminoxanes used as co-catalysts according to the invention are not, owing to their mode of preparation, pure compounds, the molarity of aluminoxane solutions hereinafter is based on their aluminium content.

According to the present invention, also a boron containing co-catalyst can be used instead of the aluminoxane co-catalyst or the aluminoxane co-catalyst can be used in combination with a boron containing co-catalyst.

It will be appreciated by the person skilled in the art that where boron based co-catalysts are employed, it is normal to pre-alkylate the complex by reaction thereof with an aluminium alkyl compound, such as TIBA. This procedure is well known and any suitable aluminium alkyl, e.g. $Al(C_1$-$C_6$ alkyl$)_3$ can be used. Preferred aluminium alkyl compounds are triethylaluminium, tri-isobutylaluminium, tri-isohexylaluminium, tri-n-octylaluminium and triisooctylaluminium.

Alternatively, when a borate co-catalyst is used, the metallocene catalyst complex is in its alkylated version, that is for example a dimethyl or dibenzyl metallocene catalyst complex can be used.

Boron based co-catalysts of interest include those of formula (IV)

$$BY_3 \qquad (IV)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl) borane.

Particular preference is given to tris(pentafluorophenyl)borane.

However it is preferred that borates are used, i.e. compounds containing a borate 3+ ion. Such ionic co-catalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include:

triethylammoniumtetra(phenyl)borate,
tributylammoniumtetra(phenyl)borate,
trimethylammoniumtetra(tolyl)borate,
tributylammoniumtetra(tolyl)borate,
tributylammoniumtetra(pentafluorophenyl)borate,
tripropylammoniumtetra(dimethylphenyl)borate,
tributylammoniumtetra(trifluoromethylphenyl)borate,
tributylammoniumtetra(4-fluorophenyl)borate,
N,N-dimethylcyclohexylammoniumtetrakis(pentafluorophenyl)borate,
N,N-dimethylbenzylammoniumtetrakis(pentafluorophenyl)borate,
N,N-dimethylaniliniumtetra(phenyl)borate,
N,N-diethylaniliniumtetra(phenyl)borate,
N,N-dimethylaniliniumtetrakis(pentafluorophenyl)borate,
N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate,
triethylphosphoniumtetrakis(phenyl)borate,
diphenylphosphoniumtetrakis(phenyl)borate,
tri(methylphenyl)phosphoniumtetrakis(phenyl)borate,

tri(dimethylphenyl)phosphoniumtetrakis(phenyl)borate,
triphenylcarbeniumtetrakis(pentafluorophenyl)borate,
or ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate or
N,N- dimethylbenzylammoniumtetrakis(pentafluorophenyl)borate.

It has been surprisingly found that certain boron co-catalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred co-catalysts are aluminoxanes, more preferably methylaluminoxanes, combinations of aluminoxanes with Al-alkyls, boron or borate co-catalysts, and combination of aluminoxanes with boron-based co-catalysts.

Suitable amounts of co-catalyst will be well known to the person skilled in the art. The molar ratio of boron to the metal ion of the metallocene may be in the range 0.5:1 to 10:1 mol/mol, preferably 1:1 to 10:1, especially 1:1 to 5:1 mol/mol.

The molar ratio of Al in the aluminoxane to the metal ion of the metallocene may be in the range 1:1 to 2000:1 mol/mol, preferably 10:1 to 1000:1, and more preferably 50:1 to 500:1 mol/mol.

The catalyst can be used in supported or unsupported form, preferably in supported form. The particulate support material used is preferably an organic or inorganic material, such as silica, alumina or zirconia or a mixed oxide such as silica-alumina, in particular silica, alumina or silica-alumina. The use of a silica support is preferred. The person skilled in the art is aware of the procedures required to support a metallocene catalyst.

Especially preferably, the support is a porous material so that the complex may be loaded into the pores of the support, e.g. using a process analogous to those described in WO94/14856 (Mobil), WO95/12622 (Borealis) and WO2006/097497.

The average particle size of the silica support can be typically from 10 to 100 $\mu$m. However, it has turned out that special advantages can be obtained if the support has a median particle size d50 from 15 to 80 $\mu$m, preferably from 18 to 50 $\mu$m. The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is well known in the art.

According to a second embodiment of the present invention, the propylene homo- or copolymer (PP) being the matrix of the heterophasic polypropylene composition (HECO) is a propylene copolymer (cPP).

The heterophasic polypropylene composition (HECO) according to the second embodiment of the present invention preferably has a rather low melt flow rate. Preferably, the melt flow rate $MFR_2$ (230 °C, 2.16 kg) determined according to ISO 1133 of the heterophasic polypropylene composition (HECO) according to the second embodiment of the present invention is in the range of 5.0 to 20.0 g/10 min, more preferably in the range of 6.0 to 15.0 g/10 min.

It is preferred that the heterophasic polypropylene composition (HECO) according to the second embodiment of the present invention comprises

i) 40.0 to 90.0 wt.-%, more preferably 45.0 to 85.0 wt.-%, still more preferably 56.0 to 74.0 wt.-%, like 58.0 to 65.0 wt.-% of the propylene copolymer (cPP), and
ii) 10.0 to 60.0 wt.-%, more preferably 15.0 to 55.0 wt.-%, still more preferably 26.0 to 44.0 wt.-%, like 35.0 to 42.0 wt.-% of the elastomeric ethylene copolymer (E),

based on the overall weight of the heterophasic polypropylene composition (HECO).

The propylene copolymer (cPP) preferably comprises monomers copolymerizable with propylene, for example comonomers such as ethylene and/or $C_4$ to $C_8$ $\alpha$-olefins, in particular ethylene and/or $C_4$ to $C_6$ $\alpha$-olefins, e.g. 1-butene and/or 1-hexene. Preferably, the propylene copolymer (cPP) comprises, especially consists of, monomers copolymerizable with propylene from the group consisting of ethylene, 1-butene and 1-hexene. More specifically, the propylene copolymer (cPP) comprises - apart from propylene - units derivable from ethylene and/or 1-butene. Thus, in an especially preferred embodiment the propylene copolymer (cPP) comprises units derivable from ethylene and propylene only.

In particular, it is preferred that the propylene copolymer (cPP) is a random propylene copolymer, like a random copolymer of propylene and ethylene.

The term "random copolymer" has to be preferably understood according to IUPAC (Pure Appl. Chem., Vol. No. 68, 8, pp. 1591 to 1595, 1996). Preferably the molar concentration of comonomer dyads, like ethylene dyads, obeys the

relationship

$$[HH] < [H]^2$$

wherein

[HH] is the molar fraction of adjacent comonomer units, like of adjacent ethylene units, and
[H] is the molar fraction of total comonomer units, like of total ethylene units, in the polymer.

Preferably, the propylene copolymer (cPP) has a comonomer content, like ethylene content, in the range of 2.2 to 8.5 mol-%, more preferably in the range of 2.5 to 6.0 mol-%, still more preferably in the range of 3.0 to 4.8 mol-%, like in the range of 3.5 to 4.0 mol-%.
Further, it is preferred that the propylene copolymer (cPP) has a melt flow rate $MFR_2$ (230 °C, 2.16 kg) determined according to ISO 1133 in the range of 5.0 to 20.0 g/10 min, more preferably in the range of 6.0 to 15.0 g/10 min, still more preferably in the range of 6.5 to 12.0 g/10 min, like in the range of 7.0 to 10.0 g/10 min.
The melting temperature of the propylene copolymer (cPP) is preferably in the range of 120 to 150 °C, more preferably in the range of 123 to 145 °C, still more preferably in the range of 128 to 140 °C, like in the range of 133 to 139 °C.
The process for the preparation of the propylene copolymer (cPP) is preferably a sequential polymerization process comprising at least two reactors connected in series, wherein said process comprises the steps of

(A) optionally polymerizing in a first reactor (R-1) being a slurry reactor (SR), preferably a loop reactor (LR), propylene and optionally a comonomer selected from ethylene and C4 to C12 α-olefins, preferably ethylene, obtaining a first propylene copolymer fraction,
(B) transferring said first propylene copolymer fraction and unreacted comonomers of the first reactor (R-1) in a second reactor (R-2) being a gas phase reactor (GPR-1),
(C) feeding to said second reactor (R-2) propylene and a comonomer selected from ethylene and C4 to C12 α-olefins, preferably ethylene,
(D) polymerizing in said second reactor (R-2) and in the presence of said first propylene copolymer fraction and a comonomer selected from ethylene and C4 to C12 α-olefins, preferably ethylene, obtaining a second propylene copolymer fraction, said first propylene copolymer fraction and said second propylene copolymer fraction form the propylene copolymer (cPP) as defined in the instant invention, wherein further in the first reactor (R-1) and second reactor (R-2) the polymerization takes place in the presence of a solid catalyst system (SCS).

It is preferred that the solid catalyst system (SCS) comprises the metallocene catalyst of formula (I) and the cocatalyst as described with regard to the reference is made to the heterophasic polypropylene composition (HECO) according to the first embodiment of the present invention.
Accordingly, it is preferred that the solid catalyst system (SCS) as described above including all preferred embodiments is applied for the preparation of the propylene copolymer (cPP).
Regarding the term "sequential polymerization process", reference is made to the definition provided above.
The first reactor (R-1), if applied, is a slurry reactor (SR) and can be any continuous or simple stirred batch tank reactor or loop reactor operating in slurry. According to the present invention the slurry reactor (SR) is preferably a loop reactor (LR).
The second reactor (R-2) and any subsequent reactors are gas phase reactors (GPR). Such gas phase reactors (GPR) can be any mechanically mixed or fluid bed reactors. Preferably the gas phase reactor(s) (GPR) comprise a mechanically agitated fluid bed reactor with gas velocities of at least 0.2 m/sec. Thus it is appreciated that the gas phase reactor (GPR) is a fluidized bed type reactor preferably with a mechanical stirrer.
The condition (temperature, pressure, reaction time, monomer feed) in each reactor is dependent on the desired product which is in the knowledge of a person skilled in the art. As already indicated above, the first reactor (R-1) is a slurry reactor (SR), like a loop reactor (LR), whereas the second reactor (R-2) is a gas phase reactor (GPR-1). The subsequent reactors - if present - are also gas phase reactors (GPR).
A preferred multistage process is a "loop-gas phase"-process, such as developed by Borealis A/S, Denmark (known as BORSTAR® technology) described e.g. in patent literature, such as in EP 0 887 379 or in WO 92/12182.
Multimodal polymers can be produced according to several processes which are described, e.g. in WO 92/12182, EP 0 887 379, and WO 98/58976.
Regarding the conditions for the first reactor (R-1), i.e. the slurry reactor (SR), like the loop reactor (LR) and the second reactor (R-2), i.e. the gas phase reactor (GPR), as well as the residence times, reference is made to the conditions defined above regarding the heterophasic polypropylene composition (HECO) according to the first embodiment of the

present invention. This applies accordingly for the optional application of a prepolymerization step.

The elastomeric ethylene copolymer (E) according to the second embodiment of the present invention can comprise monomers copolymerizable with ethylene, for example comonomers such as $C_3$ to $C_{12}$ $\alpha$-olefins, in particular propylene, 1-butene, 1-hexene and/or 1-octene. More specifically, the elastomeric ethylene copolymer (E) according to the second embodiment of the present invention comprises - apart from ethylene - units derivable from 1-butene, 1-hexene and/or 1-octene.

It is especially preferred that the elastomeric ethylene copolymer (E) according to the second embodiment of the present invention is a copolymer of ethylene and 1-octene.

Preferably, the elastomeric ethylene copolymer (E) according to the second embodiment of the present invention is a very low density polyethylene, more preferably a very low density polyethylene polymerized using single site catalysis.

The elastomeric ethylene copolymer (E) according to the second embodiment of the present invention has a density determined according to ISO 1183-187 in the range of 860 to 890 kg/m$^3$. Preferably, the density determined according to ISO 1183-187 of the elastomeric ethylene copolymer (E) according to the second embodiment of the present invention is in the range of 865 to 885 kg/m$^3$, more preferably in the range of 870 to 884 kg/m$^3$, like in the range of 879 to 883 kg/m$^3$.

Preferably, the elastomeric ethylene copolymer (E) according to the second embodiment of the present invention has a melt flow rate MFR (190 °C, 2.16 kg) determined according to ISO 1133 in the range of 0.8 to 20.0 g/10 min, more preferably in the range of 0.9 to 10.0 g/10 min, still more preferably in the range of 1.0 to 5.0 g/10 min, like in the range of 1.0 to 2.0 g/10.0 min.

The ethylene content of the elastomeric ethylene copolymer (E) according to the second embodiment of the present invention is in the range of 55.0 to 85.0 wt.-%, preferably in the range of 65.0 to 80.0 wt.-%, more preferably in the range of 70.0 to 78.0 wt.-%, based on the overall weight of the elastomeric ethylene copolymer (E).

Additionally it is preferred that the elastomeric ethylene copolymer (E) according to the second embodiment of the present invention has a melting temperature Tm determined according to differential scanning calorimetry (DSC) of below 100 °C, more preferably in the range of 50 °C to 90 °C, still more preferably in the range of 55 °C to 85 °C.

Alternatively or additionally to the previous paragraph it is preferred that the elastomeric ethylene copolymer (E) according to the second embodiment of the present invention has a glass transition temperature of below -25 °C, more preferably in the range of -65 °C to -30 °C, still more preferably in the range of -60 °C to -35 °C.

In one preferred embodiment the elastomeric ethylene copolymer (E) according to the second embodiment of the present invention is prepared with at least one single-site catalyst. The elastomeric ethylene copolymer (E) according to the second embodiment of the present invention may also be prepared with more than one single-site catalyst or may be a blend of multiple elastomeric copolymers prepared with different single-site catalysts. In some embodiments, the elastomeric ethylene copolymer (E) according to the second embodiment of the present invention is a substantially linear ethylene polymer (SLEP). SLEPs and other single-site catalyzed elastomeric ethylene copolymers are known in the art, for example, US 5,272,236. These resins are also commercially available, for example, as Queo™ plastomers available from Borealis, ENGAGE™ plastomer resins available from Dow Chemical Co., EXACT™ polymers from Exxon or TAFMER™ polymers from Mitsui, Lucene polymers from LG, Fortify polymers from Sabic or Solumer polymers from SK Chemicals.

The heterophasic polypropylene composition (HECO) according to the second embodiment of the present invention may further comprise a low density polyethylene (LDPE).

Preferably, the low density polyethylene (LDPE) has a melt flow rate MFR (190 °C, 2.16 kg) determined according to ISO 1133 in the range of 0.5 to 5.0 g/10 min, more preferably in the range of 0.8 to 10.0 g/10 min, still more preferably in the range of 1.0 to 7.0 g/10 min, like in the range of 2.5 to 3.5 g/10 min.

Additionally, it is preferred that the low density polyethylene (LDPE) has a density determined according to ISO 1183-187 of more than 900 kg/m$^3$, preferably in the range of 920 to 960 kg/m$^3$ , more preferably in the range of 925 to 955 kg/m$^3$.

Further, it is preferred that the low density polyethylene (LDPE) is a copolymer of ethylene and a polar comonomer copolymerizable with ethylene. Examples of polar comonomers are vinyl carboxylate esters selected from the group consisting of vinyl acetate and vinyl pivalate, (meth)acrylates, such as methyl(meth)acrylate, ethyl(meth) acrylate, butyl(meth)acrylate and hydroxyethyl-(meth)acrylate, olefinically unsaturated carboxylic acids, such as (meth) acrylic acid, maleic acid and fumaric acid, (meth)acrylic acid derivatives, such as (meth)acrylonitrile and (meth)acrylic amide, and vinyl ethers, such as vinyl methyl ether and vinyl phenyl ether. Preferably, the polar comonomer is a vinyl carboxylate ester. It is especially preferred that the polar comonomer is vinyl acetate.

Further, it is preferred that the low density polyethylene (LDPE) has a comonomer content, preferably vinyl acetate content in the range of 10.0 to 40.0 wt.-%, more preferably in the range of 15.0 to 35.0 wt.-%, still more preferably in the range of 20.0 to 33.0 wt.-%, like in the range of 25.0 to 30.0 wt.-%, based on the overall weight of the low density polyethylene (LDPE). It is particularly preferred that the low density polyethylene (LDPE) consists of ethylene and vinyl acetate units only.

The low density polyethylene (LDPE) is preferably produced by a high-pressure polymerization with free radical initiation.

Preferably, the low density polyethylene (LDPE) is a copolymer known in the art. It is especially preferred that the low density polyethylene (LDPE) is the commercial copolymer of ethylene and vinyl acetate OE5328I of Borealis.

The heterophasic polypropylene composition (HECO) according to the second embodiment of the present invention is preferably obtained by melt blending the propylene copolymer (cPP), the elastomeric ethylene copolymer (E) and optionally the low density polyethylene (LDPE).

The fiber reinforced composition (C) according to the second embodiment of the present invention preferably has a melt flow rate $MFR_2$ (230 °C, 2.16 kg) determined according to ISO 1133 in the range of 1.0 to 10.0 g/10 min, more preferably in the range of 1.5 to 6.0 g/10 min, still more preferably in the range of 2.0 to 4.5 g/10 min, like in the range of 2.5 to 3.8 g/10 min.

Further, it is preferred that the fiber reinforced composition (C) according to the second embodiment of the present invention has a tensile modulus determined according to ISO 527-1A in the range of 2500 to 5500 MPa, more preferably in the range of 2550 to 4200 MPa, still more preferably in the range of 2600 to 3500 MPa, like in the range of 2650 to 2800 MPa.

Additionally or alternatively, it is preferred that the fiber reinforced composition (C) according to the second embodiment of the present invention has an elongation at break determined according to ISO 527-2 of more than 10.0 %, more preferably more than 10.3 %, still more preferably more than 10.8 %, like equal or above 11.0 %.

**The fibers (F)**

Essential components of the present fiber reinforced composition (C) are the fibers (F).

Preferably the fibers (F) are selected from the group consisting of glass fibers, carbon fibers, polymeric fibers, metal fibers, mineral fibers, ceramic fibers and mixtures thereof. More preferably, the fibers (F) are glass fibers and/or carbon fibers.

It is especially preferred that the fibers (F) are glass fibers (GF). Preferably, the glass fibers (GF) are cut glass fibers, also known as short glass fibers (SGF) or chopped strands, and/or long glass fibers (LGF), preferably long glass fibers (LGF) obtained from glass rovings.

It is particularly preferred that the fibers (F) are short glass fibers (GF).

The cut or short glass fibers (SGF) used in the fiber reinforced composition (C) preferably have an average length in the range of from 2.0 to 10.0 mm, more preferably in the range of 2.3 to 9.0 mm, still more preferably in the range of 2.5 to 8.0 mm, like in the range of 3.0 to 7.0 mm.

The cut or short glass fibers (SGF) used in the fiber reinforced composition (C) preferably have an average diameter of from 5 to 20 μm, more preferably from 6 to 18 μm, still more preferably 8 to 16 μm.

Preferably, the short glass fibers (SGF) have an aspect ratio of 125 to 650, preferably of 150 to 500, more preferably 200 to 450. The aspect ratio is the relation between average length and average diameter of the fibers.

**The adhesion promoter (AP)**

In accordance with the present invention, the fiber reinforced polypropylene composition (C) may further comprise an adhesion promoter (AP). In case the fibers (F) are glass fibers and/or carbon fibers, it is preferred that the fiber reinforced polypropylene composition (C) comprises the adhesion promoter (AP).

The adhesion promoter (AP) is specified as being a polar modified polypropylene (PM-PP) homo- or copolymer.

The polar modified polypropylene (PM-PP) homo- or copolymer comprises a low molecular weight compound having reactive polar groups. Modified polypropylene homopolymers and copolymers, like copolymers of propylene and ethylene or with other α-olefins, e.g. C4 to C10 α-olefins, are most preferred, as they are highly compatible with the propylene homo- or copolymer (PP) of the inventive fiber reinforced polypropylene composition (C).

In terms of structure, the polar modified polypropylene (PM-PP) homo- or copolymer are preferably selected from graft homo- or copolymers.

In this context, preference is given to polar modified polypropylene (PM-PP) homo- or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic

acid as the polar modified polypropylene (PM-PP) homo- or copolymer, i.e. the adhesion promoter (AP).

The modified polymer, i.e. the adhesion promoter, can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter (AP), are from 0.5 to 5.0 wt.-%. For example, the amount may be in the range of 0.5 wt.-% to 4.5 wt.-%, preferably in the range of 0.5 wt.-% to 4.0 wt.-%, more preferably in the range of 0.5 wt.-% to 3.5 wt.-%.

Preferred values of the melt flow rate $MFR_2$ (230 °C) for the polar modified polypropylene (PM-PP) homo- or copolymer, i.e. for the adhesion promoter (AP), are from at least 20.0 to 400 g/10 min. It is particularly preferred that the polar modified polypropylene (PM-PP) homo- or copolymer has a melt flow rate $MFR_2$ (230 °C) in the range of 40.0 to 300 g/10 min, more preferably in the range of 50.0 to 250 g/10 min.

In one preferred embodiment of the present invention, the adhesion promoter (AP) is a maleic anhydride modified polypropylene homo-or copolymer and/or an acrylic acid modified polypropylene homo-or copolymer. Preferably, the adhesion promoter (AP) is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

## The additives (AD)

In addition to the heterophasic polypropylene composition (HECO), the fibers (F) and the adhesion promoter (AP), the fiber reinforced composition (C) of the invention may include additives (AD). Typical additives are acid scavengers, antioxidants, colorants, light stabilisers, plasticizers, slip agents, anti-scratch agents, dispersing agents, processing aids, lubricants, pigments, and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

### The Polymeric Carrier Material

Preferably the fiber reinforced polypropylene composition (C) of the invention does not comprise (a) further polymer (s) different to the components of the heterophasic polypropylene composition (HECO) and the adhesion promoter (AP), in an amount exceeding 15 wt.-%, preferably in an amount exceeding 10 wt.-%, more preferably in an amount exceeding 9 wt.-%, based on the weight of the fiber reinforced polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the fiber reinforced polypropylene composition (C) of the invention. The polymeric carrier material is not limited to a particular polymer. The polymeric carrier material may be ethylene homopolymer, ethylene copolymer obtained from ethylene and α-olefin comonomer such as C3 to C8 α-olefin comonomer, propylene homopolymer and/or propylene copolymer obtained from propylene and α-olefin comonomer such as ethylene and/or C4 to C8 α-olefin comonomer. It is preferred that the polymeric carrier material does not contain monomeric units derivable from styrene or derivatives thereof.

## The article

The present invention also relates to an article, like an injection moulded article, comprising the fiber reinforced composition (C) as defined above. The present invention in particular relates to an article, like an injection moulded article, comprising at least 60 wt.-%, more preferably at least 80 wt.-%, still more preferably at least 90 wt.-%, like at least 95 wt.-% or at least 99 wt.-%, of the fiber reinforced polypropylene composition (C) as defined above. In an especially preferred embodiment the present invention relates to an article, like an injection moulded article, consisting of the fiber reinforced composition (C) as defined above.

Preferably, the article is an automotive article, like an injection moulded automotive article.

## Further embodiments

[1] Fiber reinforced composition (C), comprising

a) 55.0 to 94.9 wt.-% of a heterophasic polypropylene composition (HECO), comprising

i) a matrix being a propylene homo- or copolymer (PP) having an amount of 1,2 erythro regio-defects of at least 0.4 mol-% and a comonomer content equal or below 8.5 mol-%, and
ii) an elastomeric ethylene copolymer (E) being dispersed in said matrix,

b) 5.0 to 45.0 wt.-% of fibers (F), and
c) optionally 0.1 to 5.0 wt.-% of an adhesion promoter (AP),

based on the overall weight of the fiber reinforced composition (C),
wherein the fiber reinforced composition (C) has a melt flow rate $MFR_2$ (230 °C, 2.16 kg) determined according to ISO 1133 in the range of 1.0 to 60.0 g/10 min.

[2] Fiber reinforced composition (C) according to embodiment [1], wherein the heterophasic polypropylene composition (HECO) comprises

i) 60.0 to 95.0 wt.-% of the matrix being the propylene homo- or copolymer (PP), and
ii) 5.0 to 40.0 wt.-% of the elastomeric ethylene copolymer (E),

based on the overall weight of the heterophasic copolymer (HECO).
[3] Fiber reinforced composition (C) according to embodiment [1] or [2], wherein the elastomeric ethylene copolymer (E) has an ethylene content in the range of 15.0 to 85.0 wt.-%, based on the overall weight of the elastomeric ethylene copolymer (E).
[4] Fiber reinforced composition (C) according to any one of embodiments [1] to [3], wherein the heterophasic polypropylene composition (HECO) has a melting temperature Tm determined according to differential scanning calorimetry (DSC) in the range of 130 to 165 °C, and/or
[5] Fiber reinforced composition (C) according to any one of embodiments [1] to [4], wherein the heterophasic polypropylene composition (HECO) has an intrinsic viscosity (IV) measured according to ISO 1628/1 (at 135 °C in decalin) of the soluble fraction (SF) determined according to CRYSTEX QC the range of 1.8 to 3.0 dl/g.
[6] Fiber reinforced composition (C) according to any one of embodiments [1] to [5], wherein the fibers (F) are glass fibers (GF), preferably short glass fibers (SGF) having

i) an average length of 2.0 to 10.0 mm, and/or
ii) an average diameter of 5 to 20 μm.

[7] Fiber reinforced composition (C) according to any one of embodiments [1] to [6], wherein the adhesion promoter (AP) is a polar modified polypropylene (PM-PP) being a propylene homo- or copolymer grafted with maleic anhydride having a melt flow rate MFR (230 °C, 2.16 kg) determined according to ISO 1133 of at least 20.0 g/10 min to 400 g/10 min.
[8] Fiber reinforced composition (C) according to any one of embodiments [1] to [7],
wherein

i) the propylene homo- or copolymer (PP) is a propylene homopolymer (hPP), and
ii) the elastomeric ethylene polymer (E) is a copolymer of ethylene and propylene.

[9] Fiber reinforced composition (C) according to embodiment [8], wherein the propylene homopolymer (hPP) has a melting temperature Tm determined according to differential scanning calorimetry (DSC) in the range of 140 to 160 °C.
[10] Fiber reinforced composition (C) according to embodiment [8] or [9], wherein the heterophasic polypropylene composition (HECO) has

i) a comonomer content in the range of 2.2 to 8.7 mol-%, and/or
ii) a melt flow rate $MFR_2$ (230 °C, 2.16 kg) determined according to ISO 1133 in the range of 20.0 to 100 g/10 min.

[11] Fiber reinforced composition (C) according to any one of embodiments [8] to [10], wherein the heterophasic polypropylene composition (HECO) has

i) a xylene cold soluble (XCS) content determined at 25 °C according ISO 16152 in the range of 5.0 to 35.0 wt.-%, based on the overall weight of the heterophasic polypropylene composition (HECO), and/or
ii) an ethylene content of the xylene cold soluble (XCS) fraction in the range of 20.9 to 44.7 mol-%.
and/or
ii) a soluble fraction (SF) determined according to CRYSTEX QC in the range of 5.0 to 35.0 wt.-%, based on the overall weight of the heterophasic polypropylene composition (HECO), and/or
iv) an ethylene content of the soluble fraction (SF) determined according to CRYSTEX QC in the range of 20.9 to 44.7 mol-%.

[12] Fiber reinforced composition (C) according to any one of embodiments [8] to [11], having

i) a tensile modulus determined according to ISO 527-1A in the range of 3000 to 6000 MPa, and/or
ii) an elongation at break determined according to ISO 527-2 of more than 3.0 %.

[13] Fiber reinforced composition (C) according to any one of embodiments [1] to [7], wherein

i) the propylene homo- or copolymer (PP) is a propylene copolymer (cPP) copolymer of propylene and ethylene having an ethylene content of 2.2 to 8.5 mol-%, and
ii) the elastomeric ethylene copolymer (E) is a copolymer of ethylene and a $C_4$ to $C_{12}$ $\alpha$-olefin, preferably 1-octene, having an ethylene content of 55.0 to 85.0 wt.-%, based on the overall weight of elastomeric ethylene copolymer (E).

[14] Fiber reinforced composition (C) according to embodiment [13], wherein

i) the propylene copolymer (cPP) has a melt flow rate $MFR_2$ (230 °C, 2.16 kg) determined according to ISO 1133 in the range of 5.0 to 20.0 g/10 min, and/or
ii) the elastomeric ethylene copolymer (E) has a melt flow rate MFR (190 °C, 2.16 kg) determined according to ISO 1133 in the range of 0.8 to 20.0 g/10 min and/or a density determined according to ISO 1183-187 in the range of 860 to 890 kg/$m^3$
and/or
iii) the fiber reinforced composition (C) has a melt flow rate $MFR_2$ (230 °C, 2.16 kg) determined according to ISO 1133 in the range of 1.0 to 10.0 g/10 min.

[15] Fiber reinforced composition (C) according to embodiment [13] or [14], having

i) a tensile modulus determined according to ISO 527-1A in the range of 2500 to 5500 MPa, and/or
ii) an elongation at break determined according to ISO 527-2 of more than 10.0 %.

[16] Fiber reinforced composition (C) according to any one of embodiments [1] to [15], further comprising up to 20.0 wt.-% of a low density polyethylene (LDPE) homo- or copolymer having a density determined according to ISO 1183-187 of more than 900 kg/$m^3$ and comprising ethylene and optionally vinyl acetate.
[17] Fiber reinforced composition (C) according to any one of embodiments [1] to [16], wherein the propylene homo- or copolymer (PP) is obtained in the presence of a solid catalyst system (SCS) comprising a metallocene complex complex preferably having the formula (I)

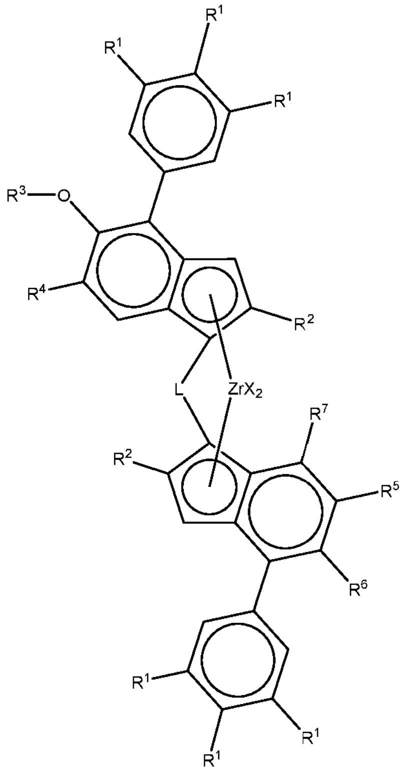

Formula (I)

wherein each X independently is a sigma-donor ligand,

L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;

$R^7$ is H or a linear or branched $C_1$-$C_6$-alkyl group or an aryl or heteroaryl group having 6 to 20 carbon atoms optionally substituted by one to three groups $R^{11}$,

each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group.

[18] Article, comprising the fiber reinforced composition (C) according to any one of embodiments [1] to [17].

The present invention will now be described in further detail by the examples provided below.

**EXAMPLES**

## A. Measuring methods

The following definitions of terms and determination methods apply for the above general description of the invention as well as to the below examples unless otherwise defined.

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C or 190°C and a load of 2.16 kg.

**Melting temperature $T_m$** and **crystallization temperature $T_c$,** were measured with Mettler TA820 differential scanning calorimetry (DSC) on 5-7 mg samples. DSC was run according to ISO 11357 / part 3 / method C2 in a heat / cool / heat cycle with a scan rate of 10 °C/min in the temperature range of -30 to +225°C. Crystallization temperature was determined from the cooling step, while melting temperature is determined from the second heating step.

All mechanical measurements were conducted after 96 h conditioning time (at 23°C at 50 % relative humidity) of the test specimen.

### Quantification of PP matrix microstructure by $^{13}$C-NMR spectroscopy

Quantitative nuclear-magnetic resonance (NMR) spectroscopy was used to quantify the stereo-regularity (tacticity) and regio-regularity of the crystalline matrix of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a 13C optimised 10 mm extended temperature probe head at 125°C using nitrogen gas for all pneumatics.

For propylene homopolymers approximately 200 mg of material was dissolved in 1,2-tetrachloroethane-d2 (TCE-d2). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs. For propylene homopolymers all chemical shifts are internally referenced to the methyl isotactic pentad (mmmm) at 21.85 ppm. The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251). Specifically the influence of regio defects and comonomer on the quantification of the tacticity distribution was corrected for by subtraction of representative regio defect and comonomer integrals from the specific integral regions of the stereo sequences. The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253). The amount of 2,1 erythro regio defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from

this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * ( P_{21e} / P_{total} )$$

**Determination** of the C2- and C3-content in PP copolymers

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents. For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * fE$$

The weight percent comonomer incorporation was calculated from the mole fraction:

$$E\ [wt.\text{-}\%] = 100 * (fE * 28.06) / ((fE * 28.06) + ((1\text{-}fE) * 42.08))$$

**Comonomer content in ethylene/1-octene copolymer** was measured in a known manner based on Fourier transform infrared spectroscopy (FTIR) calibrated with $^{13}C$-NMR, using Nicolet Magna 550 IR spectrometer together with Nicolet Omnic FTIR software. Films having a thickness of about 250 μm were compression moulded from the samples. Similar films were made from calibration samples having a known content of the comonomer. The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

**The glass transition temperatures Tg** were determined by dynamic mechanical analysis according to ISO 6721-7. The measurements were done in torsion mode on compression moulded samples (40x10x1 $mm^3$) between -100 °C and +150 °C with a heating rate of 2 °C/min and a frequency of 1 Hz.

**Density** was measured according to ISO 1183-187. Sample preparation is done by compression moulding in accordance with ISO 1872-2:2007.

**Xylene Cold Soluble (XCS)**

Xylene Cold Soluble fraction at room temperature (XCS, wt.-%) was determined at 25°C according to ISO 16152; 5$^{th}$ edition; 2005-07-01.

**Flexural Modulus:** The flexural modulus was determined in 3-point-bending according to ISO 178 on injection moulded specimens of 80 x 10 x 4 mm prepared in accordance with ISO 294-1:1996.

**Charpy notched impact strength** was determined according to ISO 179-1 /1eA at 23 °C by using injection moulded test specimens (80 x 10 x 4 mm) prepared according to EN ISO 1873-2.

**Tensile properties** were determined on injection moulded dogbone specimens of 4 mm thickness prepared in accordance with EN ISO 1873-2. Tensile modulus was determined according to ISO 527-1A at a strain rate of 1 mm/min and 23°C, tensile strength and elongation (strain) at break are determined according to ISO 527-2 at a strain rate of 50 mm/min and 23°C.

**Crystex analysis**

***Crystalline and soluble fractions*** *method*

The crystalline (CF) and soluble fractions (SF) of the polypropylene (PP) compositions as well as the comonomer content and intrinsic viscosities of the respective fractions were analyzed by the CRYSTEX QC, Polymer Char (Valencia, Spain).

A schematic representation of the CRYSTEX QC instrument is shown in Figure 1a. The crystalline and amorphous fractions are separated through temperature cycles of dissolution at 160°C, crystallization at 40°C and re-dissolution in a 1,2,4-trichlorobenzene (1,2,4-TCB) at 160°C as shown in Figure 1b. Quantification of SF and CF and determination of ethylene content (C2) of the parent EP copolymer and its soluble and crystalline fractions are achieved by means of an infrared detector (IR4) and an online 2-capillary viscometer which is used for the determination of the intrinsic viscosity (iV).

The IR4 detector is a multiple wavelength detector detecting IR absorbance at two different bands (CH3 and CH2) for the determination of the concentration and the Ethylene content in Ethylene-Propylene copolymers. IR4 detector is calibrated with series of 8 EP copolymers with known Ethylene content in the range of 2 wt.-% to 69 wt.-% (determined by $^{13}C$-NMR spectroscopy) and various concentration between 2 and 13mg/ml for each used EP copolymer used for calibration.

The amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%.

The intrinsic viscosity (iV) of the parent EP copolymer and its soluble and crystalline fractions are determined with a use of an online 2-capillary viscometer and are correlated to corresponding iV's determined by standard method in decalin according to ISO 1628. Calibration is achieved with various EP PP copolymers with iV = 2-4 dL/g.

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 800 rpm.

As shown in a Figure 1a and 1b, a defined volume of the sample solution is injected into the column filled with inert support where the crystallization of the sample and separation of the soluble fraction from the crystalline part is taking place. This process is repeated two times. During the first injection the whole sample is measured at high temperature, determining the iV[dl/g] and the C2[wt.-%] of the PP composition. During the second injection the soluble fraction (at low temperature) and the crystalline fraction (at high temperature) with the crystallization cycle are measured (wt.-% SF, wt.-% C2, iV).

EP means ethylene propylene copolymer.

PP means polypropylene.

Figure 1(a): schematic diagram of the CRYSTEX QC instrument

Figure 1(b): elution of the EP copolymer sample and obtained soluble and crystalline fractions in the TREF column (column filled with inert material e.g. glass beads) (see Del Hierro, P.; Ortin, A.; Monrabal, B.; 'Soluble Fraction Analysis in polypropylene).

**Intrinsic** viscosity: The intrinsic viscosity (IV) was measured according to DIN ISO 1628/1, October 1999, in Decalin at 135°C.

**VOC/Fog emission** was measured according to VDA 278:2002 on injection moulded test specimen and on the granulated compounds. The volatile organic compounds are measured in toluene equivalents per gram. The fogging is measured in hexadecane equivalents per gram.

The measurements were carried out with a TDSA supplied by Gerstel using helium 5.0 as carrier gas and a column HP Ultra 2 of 50 m length and 0.32 mm diameter and 0.52 μm coating of 5 % Phenyl-Methyl-Siloxane.

The VOC-Analysis was done according to device setting 1 listed in the standard using following main parameters: flow mode splitless, final temperature 90 °C; final time 30 min, rate 60K/min. The cooling trap was purged with a flow-mode split 1:30 in a temperature range from -150 °C to + 280 °C with a heating rate of 12 K/sec and a final time of 5 min. The following GC settings were used for analysis: 2 min isothermal at 40 °C. heating at 3 K/min up to 92 °C, then at 5 K/min up to 160 °C, and then at 10 K/min up to 280 °C, 10 minutes isothermal; flow 1.3 ml/min.

The fog analysis was done according to device setting 1 listed in the standard using following main parameters: flow-mode splitless, rate 60 K/min; final temperature 120 °C; final time 60 min. The cooling trap was purged with a flow-mode split 1:30 in a temperature range from -150 °C to + 280 °C with a heating rate of 12 K/sec. The following GC-settings were used for analysis: isothermal at 50 °C for 2 min, heating at 25 K/min up to 160 °C, then at 10 K/min up to 280 °C, 30 minutes isothermal; flow 1.3 ml/min.

## B. Examples

### 1. Catalyst synthesis

The catalyst used was *Anti*-dimethylsilanediyl[2-methyl-4,8-di(3,5-dimethylphenyl)-1,5,6,7-tetrahydro-*s*-indacen-1-yl][2-methyl-4-(3,5-dimethylphenyl)-5-methoxy-6-*tert*-butylinden-1-yl] zirconium dichloride as disclosed in WO 2020/239602 A1 as ICS3.

### Preparation of MAO-silica support

A steel reactor equipped with a mechanical stirrer and a filter net was flushed with nitrogen and the reactor temperature was set to 20 °C. Next silica grade DM-L-303 from AGC Si-Tech Co, pre-calcined at 600 °C (5.0 kg) was added from a feeding drum followed by careful pressurising and depressurising with nitrogen using manual valves. Then toluene (22 kg) was added. The mixture was stirred for 15 min. Next 30 wt.-% solution of MAO in toluene (9.0 kg) from Lanxess was added via feed line on the top of the reactor within 70 min. The reaction mixture was then heated up to 90°C and stirred at 90 °C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60° under nitrogen flow for 2 hours and then for 5 hours under vacuum (-0.5 barg) with stirring. MAO treated support was collected as a free-flowing white powder found to contain 12.2% Al by weight.

### Catalyst preparation

30 wt.-% MAO in toluene (0.7 kg) was added into a steel nitrogen blanked reactor via a burette at 20 °C. Toluene (5.4 kg) was then added under stirring. The catalyst as cited above (93 g) was added from a metal cylinder followed by flushing with 1 kg toluene. The mixture was stirred for 60 minutes at 20 °C Trityl tetrakis(pentafluorophenyl) borate (91 g)

was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2h and additionally for 5 h under vacuum (-0.5 barg) under stirring. Dried catalyst was sampled in the form of pink free flowing powder containing 13.9% Al and 0.11% Zr.

**2. Preparation of the in-reactor heterophasic polypropylene composition (HECO1) and the propylene copolymer (cPP)**

The in-reactor heterophasic polypropylene composition (HECO1) and the propylene copolymer (cPP) were prepared in a sequential process comprising a loop reactor and one or two gas phase reactors in the presence of the above described catalyst. The reaction conditions and properties of the final polymers are summarized in Tables 1 and 2.

**Table 1:** Preparation of the in-reactor heterophasic polypropylene composition (HECO1) and the propylene copolymer (cPP)

| | | **HECO1** | **cPP** |
|---|---|---|---|
| **Prepolymerization** | | | |
| Temperature | [°C] | 18 | 20 |
| Pressure | [kPa] | 4977 | 4973 |
| Catalyst feed | [g/h] | 2.4 | 1.4 |
| TEAL/C3 | [g/t] | 0.0 | 3.1 |
| feed H2/C3 ratio | [mol/kmol] | 0.05 | 0.05 |
| Residence time | [h] | 0.36 | 0.32 |
| **Loop (R1)** | | | |
| Temperature | [°C] | 70 | 70 |
| Pressure | \| [kPa] | 4867 | 4860 |
| H2/C3 ratio | [mol/kmol] | 0.43 | 0.14 |
| C2/C3 ratio | [mol/kmol] | 1.23 | 30.08 |
| $MFR_2$ | [g/10min] | 81.9 | 2.1 |
| C2 | [mol-%] | 0.0 | 3.0 |
| Residence time | [h] | 0.29 | 0.39 |
| | | **HECO1** | **cPP** |
| Split | [wt.-%] | 57 | 58 |
| XCS | [wt.-%] | 0.6 | 0.7 |
| **GPR (R2)** | | | |
| Temperature | [°C] | 80 | 80 |
| Pressure | [kPa] | 2500 | 2500 |
| H2/C3 ratio | [mol/kmol] | 3.6 | 1.6 |
| C2/C3 ratio | [mol/kmol] | 0.0 | 85.5 |
| Residence time | [h] | | |
| Split | [wt.-%] | 32 | 42 |
| C2 (total) | [mol-%] | 0.0 | 2.4 |
| XCS | [wt.-%] | 0.75 | 0.5 |
| MFR | [g/10min] | 101 | 2.3 |

(continued)

| GPR (R3) | | | |
|---|---|---|---|
| Temperature | [°C] | 70 | - |
| Pressure | [kPa] | 2500 | - |
| H2/C3 ratio | [mol/kmol] | 2.1 | - |
| C2/C3 ratio | [mol/kmol] | 822 | - |
| Split | [wt.-%] | 11 | - |
| MFR | [g/10min] | 87.5 | - |

**Table 2:** Properties of the the in-reactor heterophasic polypropylene composition (HECO1) and the propylene copolymer (cPP) after pelletiziation

| | | HECO1 | cPP |
|---|---|---|---|
| MFR | [g/10min] | 76.2 | 8.3 |
| XCS | [wt.-%] | 11.2 | 0.47 |
| C2 | [mol-%] | 2.5 | 3.6 |
| C2 (XCS) | [mol-%] | 32.5 | n.d. |
| IV (XCS) | [dl/g] | 2.6 | n.d. |
| Tm | [°C] | 157 | 137 |
| Tc | [°C] | 121 | 100 |
| 1,2e | [mol-%] | 0.7 | 0.8 |
| SF | [wt.-%] | 10.6 | 0.5 |
| C2(SF) | [mol-%] | 31.3 | n.d. |
| C2(CF) | [mol-%] | 0.0 | |
| IV | [dl/g] | 1.26 | 2.05 |
| IV(SF) | [dl/g] | 2.51 | n.d. |
| IV(CF) | [dl/g] | 1.11 | n.d. |
| IV(SF)/IV(CF) | [-] | 2.26 | n.d. |
| Flexural modulus | [MPa] | 1257 | 760 |
| Charpy notched impact strength (23 °C) | [kJ/m$^2$] | 3.85 | 9.65 |
| Charpy notched impact strength (-20 °C) | [kJ/m$^2$] | 1.96 | n.d. |
| Tg(1) | [°C] | -45 | - |
| Tg(2) | [°C] | 0 | -4 |

**3. Preparation of the fiber reinforced composition (C) with HECO1**

The fiber reinforced composition (C) was obtained by melt blending the in-reactor heterophasic polypropylene composition (HECO1) with the glass fibers (GF), the adhesion promoter (AP) and the additives (AD) in a co-rotating twin screw extruder. The composition and properties of the inventive and comparative examples are summarized in Table 3.

**Table 3**: Composition and properties of the inventive and comparative examples

| | | IE1 | CE1 | CE2 |
|---|---|---|---|---|
| **HECO1** | [wt.-%] | 77.1 | | 98.6 |
| **HEC01a** | [wt.-%] | | 49.1 | |
| **hP** | [wt.-%] | | 28.0 | |

(continued)

| | | IE1 | CE1 | CE2 |
|---|---|---|---|---|
| **GF** | [wt.-%] | 20.0 | 20.0 | |
| **AP** | [wt.-%] | 1.5 | 1.5 | |
| **AD1** | [wt.-%] | 1.4 | 1.4 | 1.4 |
| | | | | |
| **MFR** | [g/10min] | 27 | 19 | 76 |
| **Tensile modulus** | [MPa] | 4936 | 4993 | 1298 |
| **Tensile strength** | [MPa] | 80.3 | 77.9 | 26.3 |
| **Elongation at break** | [%] | 3.6 | 3.5 | 10.5 |
| **VOC** | μg/g | 26 | 143 | 32 |
| **Fog** | μg/g | 92 | 479 | 104 |

**HECO1a** is the commercial heterophasic propylene copolymer EF015AE of Borealis AG prepared with a Ziegler-Natta catalyst having a xylene cold soluble content of 29.0 wt.-%, an ethylene content of 11.1 mol-% and an intrinsic viscosity of the xylene soluble fraction of 2.7 dl/g.

**hP** is the commercial propylene homopolymer HJ120UB of Borealis AG prepared with a Ziegler-Natta catalyst having a melt flow rate $MFR_2$ (230 °C) of 75 g/10 min, a density of 905 kg/$m^3$ and a glass transition temperature Tg of +2 °C.

**GF** is the commercial product ECS 03 T-480H of Nippon Electric Glass Co., Ltd. having a filament diameter of 10.5 μm and a strand length of 3 mm.

**AP** is the adhesion promoter SCONA TPPP 8112 GA by Scona being a polypropylene functionalized with maleic anhydride having a maleic anhydride content of 1.4 wt.-% and a MFR (190 °C, 2.16 kg) above 80 g/10 min.

**AD1** is a masterbatch consisting of 14.0 wt.-% Tris (2,4-di-t-butylphenyl) phosphite (Kinox-68- G by HPL Additives), 14.0 wt.-% of pentaerythrityl-tetrakis(3-(3',5'-di-tert. butyl-4-hydroxyphenyl)-propionate (Irganox 1010FF by BASF), 36.0 wt.-% of carbon black (50 wt.-% masterbatch) by Borealis, and 36.0 wt.-% of the propylene homopolymer HC001A by Borealis having a density of 905 kg/$m^3$ and a MFR (230 °C, 2.16 kg) of 3.2 g/10 min.

**4. Preparation of the compounded heterophasic polypropylene composition (HECO2)**

**Preparation of the fiber reinforced composition (C) with HECO2**

The propylene copolymer (cPP) was melt blended with the elastomeric ethylene copolymer (E), the glass fibers (GF), the adhesion promoter (AP), optionally the low density polyethylene (LDPE) and the additives (AD) in a co-rotating twin screw extruder. The composition and properties of the inventive and comparative examples are summarized in Table 4.

**Table 4:** Composition of the inventive and comparative examples

| | | IE2 | IE3 | CE3 | CE4 |
|---|---|---|---|---|---|
| **cPP** | [wt.-%] | 47 | 47 | | |
| **cPPa** | [wt.-%] | | | 47 | |
| **cPPb** | [wt.-%] | | | | 78.45 |
| **E** | [wt.-%] | 30 | 15 | 30 | |
| **LDPE** | [wt.-%] | | 15 | | |
| **GF** | [wt.-%] | 20 | 20 | 20 | 20 |
| **AP** | [wt.-%] | 1.5 | 1.5 | 1.5 | 1.0 |

(continued)

| | | IE2 | IE3 | CE3 | CE4 |
|---|---|---|---|---|---|
| **AD2** | [wt.-%] | 1.5 | 1.5 | 1.5 | |
| **AD3** | [wt.-%] | | | | 0.55 |
| **MFR** | [g/10min] | 2.8 | 3.6 | 2.8 | 4.0 |
| **Tensile modulus** | [MPa] | 2671 | 2758 | 2437 | 3807 |
| **Tensile strength** | [MPa] | 45.7 | 46.5 | 42.6 | 64.4 |
| **Elongation at break** | [%] | 11.6 | 11.0 | 10.2 | 5.6 |
| **VOC** | μg/g | 35 | 42 | n.d. | 28 |
| **Fog** | μg/g | 103 | 106 | n.d. | 74 |

**cPPa** is the commercial propylene ethylene random copolymer RD208CF of Borealis AG prepared with a Ziegler-Natta catalyst having an ethylene content of 7.3 mol-%, a melt flow rate $MFR_2$ (230 °C, 2.16kg) determined according to ISO 1133 of 8.0 g/10 min and a melting temperature Tm of 140 °C.

**cPPb** is the metallocene propylene ethylene random copolymer according to example IE1 of WO 2015/121160 A1 having an ethylene content of 4.1 mol-% and a melt flow rate $MFR_2$ (230 °C, 2.16 kg) determined according to ISO 1133 of 4.0 g/10 min.

**E** is the commercial copolymer of ethylene and 1-octene Queo 8201 of Borealis AG having a melt flow rate (190 °C, 2.16 kg) determined according to ISO 1133 of 1.1 g/10 min, a melting temperature Tm of 72 °C, a glass transition temperature Tg of -52 °C, a density of 882 kg/m$^3$ and an ethylene content of 75.5 wt.-%.

**LDPE** is the commercial copolymer of ethylene and vinyl acetate OE5328 of Borealis AG having a melt flow rate 190 °C, 2.16 kg) determined according to ISO 1133 of 3.0 g/10 min, a density of 950 kg/m$^3$ and a vinyl acetate content of 28.0 wt.-%.

**AD2** is a masterbatch consisting of 20.0 wt.-% of Erucamide (Finawax-E by Fine Organics), 6.6 wt.-% of Tris(2,4-di-tert.-butylphenyl)phosphite (Irgafox 168 by BASF), 6.6 wt.-% of pentaerythrityl-tetrakis(3-(3',5'-di-tert. butyl-4-hydroxyphenyl)-propionate (Irganox 1010FF by BASF), 33.3 wt.-% of carbon black (50 wt.-% masterbatch) by Borealis, and 33.3 wt.-% of the propylene homopolymer HC001A by Borealis having a density of 905 kg/m$^3$ and a MFR (230 °C, 2.16 kg) of 3.2 g/10 min.

**AD3** is a masterbatch consisting of 18.18 wt.-% of Tris(2,4-di-tert.-butylphenyl)phosphite (Irgafox 168 by BASF), 36.36 wt.-% of pentaerythrityl-tetrakis(3-(3',5'-di-tert. butyl-4-hydroxyphenyl)-propionate (Irganox 1010FF by BASF) and 45.45 wt.-% Distearyl-thio-propionate (Irganox PS-802 FL by BASF).

## Claims

**1.** Fiber reinforced composition (C), comprising

a) 55.0 to 95.0 wt.-% of a heterophasic polypropylene composition (HECO), comprising

i) a matrix being a propylene copolymer (cPP) having an amount of 1,2 erythro regio-defects of at least 0.4 mol-%, determined as disclosed in the description, and a comonomer content equal or below 8.5 mol-%, and
ii) an elastomeric ethylene copolymer (E) being dispersed in said matrix,

b) 5.0 to 45.0 wt.-% of fibers (F), and
c) optionally 0.1 to 5.0 wt.-% of an adhesion promoter (AP),
based on the overall weight of the fiber reinforced composition (C),
wherein the fiber reinforced composition (C) has a melt flow rate $MFR_2$ (230 °C, 2.16 kg) determined according to ISO 1133 in the range of 1.0 to 60.0 g/10 min.

**2.** Fiber reinforced composition (C) according to claim 1, comprising

a) 55.0 to 94.9 wt.-% of the heterophasic polypropylene composition (HECO),
b) 5.0 to 45.0 wt.-% of the fibers (F), and
c) optionally 0.1 to 5.0 wt.-% of the adhesion promoter (AP),

based on the overall weight of the fiber reinforced composition (C).

**3.** Fiber reinforced composition (C) according to claim 1 or 2, wherein the heterophasic polypropylene composition (HECO) comprises

i) 40.0 to 90.0 wt.-% of the propylene copolymer (cPP), and
ii) 10.0 to 60.0 wt.-% of the elastomeric ethylene copolymer (E),

based on the overall weight of the heterophasic copolymer (HECO).

**4.** Fiber reinforced composition (C) according to any one of the preceding claims,

wherein the elastomeric ethylene copolymer (E) has an ethylene content in the range of 55.0 to 85.0 wt.-%, based on the overall weight of the elastomeric ethylene copolymer (E), and/or
wherein the elastomeric ethylene copolymer (E) is a copolymer of ethylene and 1-octene.

**5.** Fiber reinforced composition (C) according to any one of the preceding claims,
wherein the propylene copolymer (cPP) is a copolymer of propylene and ethylene, and preferably a random copolymer of propylene and ethylene.

**6.** Fiber reinforced composition (C) according to any one of the preceding claims,

wherein the propylene copolymer (cPP) has a comonomer content in the range of 2.2 to 8.5 mol-%, and/or
has a melt flow rate $MFR_2$ (230 °C, 2.16 kg) determined according to ISO 1133 in the range of 5.0 to 20.0 g/10 min.

**7.** Fiber reinforced composition (C) according to any one of the preceding claims, wherein the fibers (F) are glass fibers (GF), preferably short glass fibers (SGF) having

i) an average length of 2.0 to 10.0 mm, and/or
ii) an average diameter of 5 to 20 $\mu$m.

**8.** Fiber reinforced composition (C) according to any one of the preceding claims, wherein the adhesion promoter (AP) is a polar modified polypropylene (PM-PP) being a propylene homo- or copolymer grafted with maleic anhydride having a melt flow rate MFR (230 °C, 2.16 kg) determined according to ISO 1133 of at least 20.0 g/10 min to 400 g/10 min.

**9.** Fiber reinforced composition (C) according to any one of the preceding claims,
wherein

i) the propylene copolymer (cPP) is a copolymer of propylene and ethylene having an ethylene content of 2.2 to 8.5 mol-%, and
ii) the elastomeric ethylene copolymer (E) is a copolymer of ethylene and a $C_4$ to $C_{12}$ $\alpha$-olefin, preferably 1-octene, having an ethylene content of 55.0 to 85.0 wt.-%, based on the overall weight of elastomeric ethylene copolymer (E).

**10.** Fiber reinforced composition (C) according to any one of the preceding claims,

wherein the elastomeric ethylene copolymer (E) has a melt flow rate MFR (190 °C, 2.16 kg) determined according to ISO 1133 in the range of 0.8 to 20.0 g/10 min
and/or
wherein the elastomeric ethylene copolymer (E) has a density determined according to ISO 1183-187 in the range of 860 to 890 kg/$m^3$.

**11.** Fiber reinforced composition (C) according to any one of the preceding claims, wherein the fiber reinforced composition (C) has one, two or all of the following characteristics (i) to (iii):

i) a melt flow rate $MFR_2$ (230 °C, 2.16 kg) determined according to ISO 1133 in the range of 1.0 to 10.0 g/10 min,
ii) a tensile modulus determined according to ISO 527-1A in the range of 2500 to 5500 MPa, and
iii) an elongation at break determined according to ISO 527-2 of more than 10.0 %.

**12.** Fiber reinforced composition (C) according to any one of the preceding claims, further comprising a low density polyethylene (LDPE), and optionally wherein the low density polyethylene (LDPE) has a melt flow rate MFR (190 °C, 2.16 kg) determined according to ISO 1133 in the range of 0.5 to 5.0 g/10 min.

**13.** Fiber reinforced composition (C) according to any one of the preceding claims, further comprising up to 20.0 wt.-% of a low density polyethylene (LDPE) homo- or copolymer having a density determined according to ISO 1183-187 of more than 900 kg/$m^3$ and comprising ethylene and optionally vinyl acetate.

**14.** Fiber reinforced composition (C) according to any one of the preceding claims, wherein the propylene copolymer (cPP) is obtained in the presence of a solid catalyst system (SCS) comprising a metallocene complex, preferably having the formula (I)

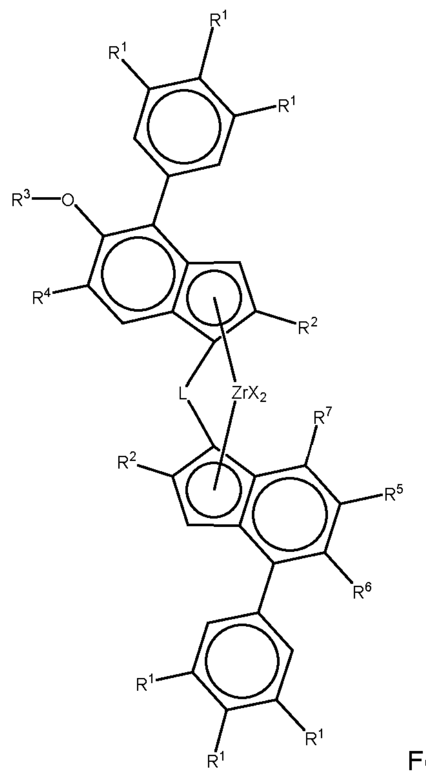

Formula (I)

wherein each X independently is a sigma-donor ligand,
L is a divalent bridge selected from -R'$_2$C-, -R'$_2$C-CR'$_2$-, -R'$_2$Si-, -R'$_2$Si-SiR'$_2$-, -R'$_2$Ge-, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,
$R^3$ is a linear or branched $C_1$-$C_6$-alkyl group, $C_{7-20}$-arylalkyl, $C_{7-20}$-alkylaryl group or $C_6$-$C_{20}$-aryl group,
$R^4$ is a $C(R^9)_3$ group, with $R^9$ being a linear or branched $C_1$-$C_6$-alkyl group,
$R^5$ is hydrogen or an aliphatic $C_1$-$C_{20}$-hydrocarbyl group optionally containing one or more heteroatoms from groups 14-16 of the periodic table;
$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$, each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group.

**15.** Article, comprising the fiber reinforced composition (C) according to any one of claims 1 to 14.

## Patentansprüche

**1.** Faserverstärkte Zusammensetzung (C), umfassend

a) 55,0 bis 95,0 Gew.-% einer heterophasischen Polypropylen-Zusammensetzung (HECO), umfassend

i) eine Matrix, die ein Propylen-Copolymer (cPP) ist, das einen Gehalt an 1,2-Erythro-Regio-Defekten von mindestens 0,4 Mol-%, bestimmt so wie in der Beschreibung offenbart, und einen Comonomergehalt von höchstens 8,5 Mol-% aufweist, und
ii) ein elastomeres Ethylen-Copolymer (E), das in der Matrix dispergiert ist,

b) 5,0 bis 45,0 Gew.-% Fasern (F) und
c) optional 0,1 bis 5,0 Gew.-% eines Haftvermittlers (AP),

bezogen auf das Gesamtgewicht der faserverstärkten Zusammensetzung (C), wobei die faserverstärkte Zusammensetzung (C) eine Schmelzflussrate $MFR_2$ (230 °C, 2,16 kg) gemäß ISO 1133 im Bereich von 1,0 bis 60,0 g/10 min aufweist.

**2.** Faserverstärkte Zusammensetzung (C) nach Anspruch 1, umfassend

a) 55,0 bis 94,9 Gew.-% der heterophasischen Polypropylen-Zusammensetzung (HECO),
b) 5,0 bis 45,0 Gew.-% der Fasern (F) und
c) optional 0,1 bis 5,0 Gew.-% des Haftvermittlers (AP),

bezogen auf das Gesamtgewicht der faserverstärkten Zusammensetzung (C).

**3.** Faserverstärkte Zusammensetzung (C) nach Anspruch 1 oder 2, wobei die heterophasische Polypropylen-Zusammensetzung (HECO) umfasst

i) 40,0 bis 90,0 Gew.-% des Propylen-Copolymers (cPP) und
ii) 10,0 bis 60,0 Gew.-% des elastomeren Ethylen-Copolymers (E),

bezogen auf das Gesamtgewicht des heterophasischen Copolymers (HECO).

**4.** Faserverstärkte Zusammensetzung (C) nach einem der voranstehenden Ansprüche,

wobei das elastomere Ethylen-Copolymer (E) einen Ethylengehalt im Bereich von 55,0 bis 85,0 Gew.-%, bezogen auf das Gesamtgewicht des elastomeren Ethylen-Copolymers (E), aufweist und/oder
wobei das elastomere Ethylen-Copolymer (E) ein Copolymer aus Ethylen und 1-Octen ist.

**5.** Faserverstärkte Zusammensetzung (C) nach einem der voranstehenden Ansprüche, wobei das Propylen-Copolymer (cPP) ein Copolymer aus Propylen und Ethylen, und vorzugsweise ein statistisches Copolymer aus Propylen und Ethylen, ist.

**6.** Faserverstärkte Zusammensetzung (C) nach einem der voranstehenden Ansprüche,

wobei das Propylen-Copolymer (cPP) einen Comonomergehalt im Bereich von 2,2 bis 8,5 Mol-% aufweist und/oder
eine Schmelzflussrate $MFR_2$ (230 °C, 2,16 kg) gemäß ISO 1133 im Bereich von 5,0 bis 20,0 g/10 min aufweist.

**7.** Faserverstärkte Zusammensetzung (C) nach einem der voranstehenden Ansprüche, wobei die Fasern (F) Glasfasern (GF) sind, vorzugsweise kurze Glasfasern (SGF) mit

i) einer durchschnittliche Länge von 2,0 bis 10,0 mm und/oder
ii) einem durchschnittlichen Durchmesser von 5 bis 20 $\mu$m.

**8.** Faserverstärkte Zusammensetzung (C) gemäß einem der voranstehenden Ansprüche, wobei der Haftvermittler (AP) ein polar modifiziertes Polypropylen (PM-PP) ist, das ein mit Maleinsäureanhydrid gepfropftes Propylen-Homo- oder -Copolymer ist, das eine Schmelzflussrate MFR (230 °C, 2,16 kg) gemäß ISO 1133 von mindestens 20,0 g/10 min bis 400 g/10 min aufweist.

**9.** Faserverstärkte Zusammensetzung (C) nach einem der voranstehenden Ansprüche, wobei

i) das Propylen-Copolymer (cPP) ein Copolymer aus Propylen und Ethylen mit einem Ethylengehalt von 2,2 bis 8,5 Mol-% ist, und
ii) das elastomere Ethylen-Copolymer (E) ein Copolymer aus Ethylen und einem $C_4$- bis $C_{12}$-$\alpha$-Olefin, vorzugsweise 1-Octen, mit einem Ethylengehalt von 55,0 bis 85,0 Gew.-%, bezogen auf das Gesamtgewicht des elastomeren Ethylen-Copolymers (E), ist.

**10.** Faserverstärkte Zusammensetzung (C) nach einem der voranstehenden Ansprüche, wobei das elastomere Ethylen-Copolymer (E) eine Schmelzflussrate MFR (190 °C, 2,16 kg) gemäß ISO 1133 im Bereich von 0,8 bis 20,0 g/10 min aufweist und/oder wobei das elastomere Ethylen-Copolymer (E) eine gemäß ISO 1183-187 bestimmte Dichte im Bereich von 860 bis 890 kg/$m^3$ aufweist.

**11.** Faserverstärkte Zusammensetzung (C) gemäß einem der voranstehenden Ansprüche, wobei die faserverstärkte Zusammensetzung (C) eine, zwei oder alle der folgenden Eigenschaften (i) bis (iii) aufweist:

i) eine Schmelzflussrate $MFR_2$ (230 °C, 2,16 kg), bestimmt gemäß ISO 1133, im Bereich von 1,0 bis 10,0 g/10 min,
ii) einen Zugmodul, bestimmt gemäß ISO 527-1A, im Bereich von 2500 bis 5500 MPa, und
iii) eine Bruchdehnung, bestimmt gemäß ISO 527-2, von mehr als 10,0 %.

**12.** Faserverstärkte Zusammensetzung (C) nach einem der voranstehenden Ansprüche, die ferner ein Polyethylen niedriger Dichte (LDPE) umfasst, wobei das Polyethylen niedriger Dichte (LDPE) optional eine gemäß ISO 1133 bestimmte Schmelzflussrate MFR (190 °C, 2,16 kg) im Bereich von 0,5 bis 5,0 g/10 min aufweist.

**13.** Faserverstärkte Zusammensetzung (C) nach einem der voranstehenden Ansprüche, die ferner bis zu 20,0 Gew.-% eines Homo- oder Copolymers aus Polyethylen niedriger Dichte (LDPE) mit einer gemäß ISO 1183-187 bestimmten Dichte von mehr als 900 kg/$m^3$ und Ethylen und gegebenenfalls Vinylacetat umfasst.

**14.** Faserverstärkte Zusammensetzung (C) nach einem der voranstehenden Ansprüche, wobei das Propylen-Copolymer (cPP) in Gegenwart eines festen Katalysatorsystems (SCS) erhalten wird, das einen Metallocenkomplex umfasst, vorzugsweise mit der Formel (I)

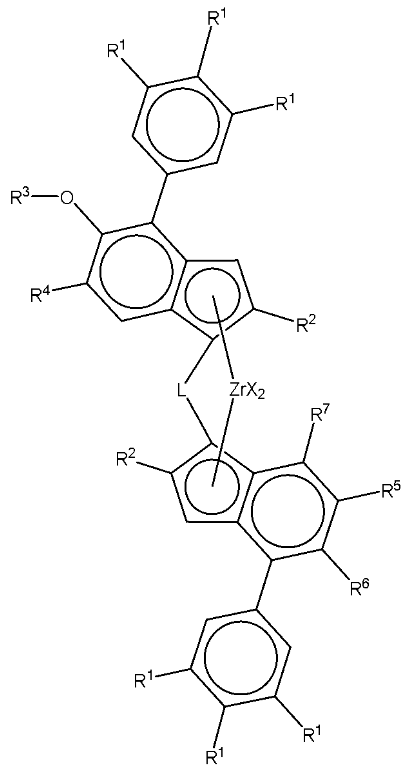

Formel (I)

wobei jedes X unabhängig voneinander ein Sigma-Donor-Ligand ist,
L eine zweiwertige Brücke ist, ausgewählt aus -R'$_2$C-, -R'$_2$C-CR'$_2$-, -R'$_2$Si-, -R'$_2$Si-SiR'$_2$ -, -R'$_2$Ge-, wobei jedes R' unabhängig voneinander ein Wasserstoffatom oder eine $C_1$ -$C_{20}$-Kohlenwasserstoffgruppe ist, die gegebenenfalls ein oder mehrere Heteroatome aus den Gruppen 14-16 des Periodensystems oder Fluoratome enthält, oder gegebenenfalls zwei R'-Gruppen zusammen einen Ring bilden können,
jedes $R^1$ unabhängig voneinander gleich oder unterschiedlich sein kann und Wasserstoff, eine lineare oder verzweigte $C_1$-$C_6$-Alkylgruppe, eine $C_{7-20}$-Arylalkyl-, $C_{7-20}$-Alkylarylgruppe oder $C_{6-20}$ -Arylgruppe oder eine OY-Gruppe ist, wobei Y eine $C_{1-10}$-Kohlenwasserstoffgruppe ist, und optional können zwei benachbarte $R^1$-Gruppen Teil eines Rings sein, der die Phenylkohlenstoffe enthält, an die sie gebunden sind,
jedes $R^2$ unabhängig voneinander gleich oder unterschiedlich sein kann und eine $CH_2$-$R^8$-Gruppe ist, wobei $R^8$ H oder eine lineare oder verzweigte $C_{1-6}$-Alkylgruppe, $C_{3-8}$-Cycloalkylgruppe, $C_{6-10}$-Arylgruppe ist,
$R^3$ eine lineare oder verzweigte $C_1$-$C_6$-Alkylgruppe, $C_{7-20}$-Arylalkylgruppe, $C_{7-20}$-Alkylarylgruppe oder $C_6$-$C_{20}$-Arylgruppe ist,
$R^4$ eine $C(R^9)_3$ -Gruppe ist, wobei $R^9$ eine lineare oder verzweigte $C_1$-$C_6$-Alkylgruppe ist,
$R^5$ Wasserstoff oder eine aliphatische $C_1$-$C_{20}$-Kohlenwassergruppe ist, die gegebenenfalls ein oder mehrere Heteroatome aus den Gruppen 14-16 des Periodensystems enthält;
$R^6$ Wasserstoff oder eine aliphatische $C_1$ -$C_{20}$-Kohlenwassergruppe ist, die optional ein oder mehrere Heteroatome aus den Gruppen 14-16 des Periodensystems enthält; oder
$R^5$ und $R^6$ zusammen einen 5-gliedrigen gesättigten Kohlenstoffring bilden können, der gegebenenfalls durch n Gruppen $R^{10}$ substituiert ist, wobei n zwischen 0 und 4 liegt;
jedes $R^{10}$ gleich oder unterschiedlich ist und eine $C_1$ -$C_{20}$-Kohlenwasserstoffgruppe oder eine $C_1$-$C_{20}$-Kohlenwasserstoffgruppe sein kann, die gegebenenfalls ein oder mehrere Heteroatome der Gruppen 14-16 des Periodensystems enthält;
Rist H oder eine lineare oder verzweigte $C_1$-$C_6$-Alkylgruppe oder eine Aryl- oder Heteroarylgruppe mit 6 bis 20 Kohlenstoffatomen, die gegebenenfalls durch eine bis drei Gruppen $R^{11}$ substituiert ist,
wobei jedes $R^{11}$ unabhängig voneinander gleich oder unterschiedlich sein kann und Wasserstoff, eine lineare oder verzweigte $C_1$-$C_6$-Alkylgruppe, eine $C_{7-20}$-Arylalkylgruppe, eine $C_{7-20}$-Alkylarylgruppe oder $C_{6-20}$-Arylgruppe oder eine OY-Gruppe, wobei Y eine $C_{1-10}$-Kohlenwasserstoffgruppe ist.

**15.** Gegenstand, umfassend die faserverstärkte Zusammensetzung (C) gemäß einem der Ansprüche 1 bis 14.

## Revendications

**1.** Composition (C) renforcée par des fibres, comprenant

a) 55,0 à 95,0 % en poids d'une composition de polypropylène hétérophasique (HECO), comprenant

i) une matrice qui est un copolymère de propylène (cPP) présentant une quantité de régio-défauts érythro 1,2 d'au moins 0,4 % en mole, déterminée comme divulgué dans la description, et une teneur en comonomère inférieure ou égale à 8,5 % en mole, et
ii) un copolymère d'éthylène élastomère (E) qui est dispersé dans ladite matrice,

b) 5,0 à 45,0 % en poids de fibres (F), et
c) optionnellement 0,1 à 5,0 % en poids d'un promoteur d'adhérence (AP), sur la base du poids total de la composition (C) renforcée par des fibres, dans laquelle la composition (C) renforcée par des fibres présente un indice de fluidité à chaud $MFR_2$ (230 °C, 2,16 kg) déterminé selon la norme ISO 1133 dans la plage de 1,0 à 60,0 g/10 min.

**2.** Composition (C) renforcée par des fibres selon la revendication 1, comprenant

a) 55,0 à 94,9 % en poids de la composition de polypropylène hétérophasique (HECO),
b) 5,0 à 45,0 % en poids des fibres (F), et
c) optionnellement 0,1 à 5,0 % en poids du promoteur d'adhérence (AP), sur la base du poids total de la composition (C) renforcée par des fibres.

**3.** Composition (C) renforcée par des fibres selon la revendication 1 ou 2, dans laquelle la composition de polypropylène hétérophasique (HECO) comprend

i) 40,0 à 90,0 % en poids du copolymère de propylène (cPP), et
ii) 10,0 à 60,0 % en poids du copolymère d'éthylène élastomère (E), sur la base du poids total du copolymère hétérophasique (HECO).

**4.** Composition (C) renforcée par des fibres selon l'une des revendications précédentes, dans laquelle le copolymère d'éthylène élastomère (E) présente une teneur en éthylène dans la plage de 55,0 à 85,0 % en poids, sur la base du poids total du copolymère d'éthylène élastomère (E), et/ou
dans laquelle le polymère d'éthylène élastomère (E) est un copolymère d'éthylène et de 1-octène.

**5.** Composition (C) renforcée par des fibres selon l'une des revendications précédentes, dans laquelle le copolymère de propylène (cPP) est un copolymère de propylène et d'éthylène, et de préférence un copolymère statistique de propylène et d'éthylène.

**6.** Composition (C) renforcée par des fibres selon l'une des revendications précédentes, dans laquelle le copolymère de propylène (cPP) présente une teneur en comonomère dans la plage de 2,2 à 8,5 % en mole, et/ou
présente un indice de fluidité à chaud $MFR_2$ (230 °C, 2,16 kg), déterminé selon la norme ISO 1133, dans la plage de 5,0 à 20,0 g/10 min.

**7.** Composition (C) renforcée par des fibres selon l'une des revendications précédentes, dans laquelle les fibres (F) sont des fibres de verre (GF), de préférence des fibres de verre courtes (SGF) présentant

i) une longueur moyenne de 2,0 à 10,0 mm, et/ou
ii) un diamètre moyen de 5 à 20 $\mu$m.

**8.** Composition (C) renforcée par des fibres selon l'une des revendications précédentes, dans laquelle le promoteur d'adhérence (AP) est un polypropylène à modification polaire (PM-PP) qui est un homo- ou copolymère de propylène greffé avec de l'anhydride maléique présentant un indice de fluidité à chaud MFR (230 °C, 2,16 kg), déterminé selon la norme ISO 1133, d'au moins 20,0 g/10 min à 400 g/10 min.

**9.** Composition (C) renforcée par des fibres selon l'une des revendications précédentes, dans laquelle

i) le copolymère de propylène (cPP) est un copolymère de propylène et d'éthylène présentant une teneur en éthylène de 2,2 à 8,5 % en mole, et
ii) le copolymère d'éthylène élastomère (E) est un copolymère d'éthylène et d'une $\alpha$-oléfine en $C_4$ à $C_{12}$, de préférence le 1-octène, présentant une teneur en éthylène de 55,0 à 85,0 % en poids, sur la base du poids total du copolymère d'éthylène élastomère (E).

**10.** Composition (C) renforcée par des fibres selon l'une des revendications précédentes, dans laquelle le copolymère d'éthylène élastomère (E) présente un indice de fluidité à chaud MFR (190 °C, 2,16 kg), déterminé selon la norme ISO 1133, dans la plage de 0,8 à 20,0 g/10 min et/ou
dans laquelle le copolymère d'éthylène élastomère (E) présente une masse volumique, déterminée selon la norme ISO 1183-187, dans la plage de 860 à 890 kg/$m^3$.

**11.** Composition (C) renforcée par des fibres selon l'une des revendications précédentes, dans laquelle la composition (C) renforcée par des fibres présente une, deux ou toutes les caractéristiques (i) à (iii) suivantes :

i) un indice de fluidité à chaud $MFR_2$ (230 °C, 2,16 kg), déterminé selon la norme ISO 1133, dans la plage de 1,0 à 10,0 g/10 min,
ii) un module de traction, déterminé selon la norme ISO 527-1A, dans la plage de 2500 à 5500 MPa, et
iii) un allongement à la rupture, déterminé selon la norme ISO 527-2, de plus de 10,0 %.

**12.** Composition (C) renforcée par des fibres selon l'une des revendications précédentes, comprenant en outre un polyéthylène basse densité (LDPE), et optionnellement dans laquelle le polyéthylène basse densité (LDPE) présente un indice de fluidité à chaud MFR (190 °C, 2,16 kg), déterminé selon la norme ISO 1133, dans la plage de 0,5 à 5,0 g/10 min.

**13.** Composition (C) renforcée par des fibres selon l'une des revendications précédentes, comprenant en outre jusqu'à 20,0 % en poids d'un homo- ou copolymère de polyéthylène basse densité (LDPE) présentant une masse volumique, déterminée selon l'ISO 1183-187, de plus de 900 kg/$m^3$ et comprenant de l'éthylène et optionnellement de l'acétate de vinyle.

**14.** Composition (C) renforcée par des fibres selon l'une des revendications précédentes, dans laquelle le copolymère de propylène (cPP) est obtenu en présence d'un système catalytique solide (SCS) comprenant un complexe de métallocène, de préférence de formule (I),

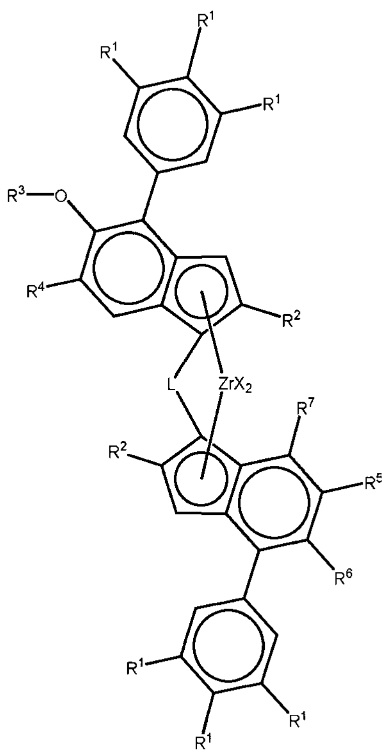

Formule (I)

dans laquelle chaque X est indépendamment un ligand donneur sigma,
L est un pont divalent choisi parmi $-R'_2C-$, $-R'_2C-CR'_2-$, $-R'_2Si-$, $-R'_2Si-SiR'_2-$, $-R'_2Ge-$, dans laquelle chaque R' est indépendamment un atome d'hydrogène ou un groupe hydrocarbyle en $C_1$-$C_{20}$ contenant optionnellement un ou plusieurs hétéroatomes des groupes 14 à 16 du tableau périodique ou atomes de fluor, ou optionnellement deux groupes R' pris ensemble peuvent former un cycle, les $R^1$ sont chacun indépendamment identiques ou peuvent être différents et sont un hydrogène, un groupe alkyle en $C_1$-$C_6$ linéaire ou ramifié, un arylalkyle en $C_{7-20}$, un groupe alkylaryle en $C_{7-20}$ ou un groupe aryle en $C_{6-20}$ ou un groupe OY, dans laquelle Y est un groupe hydrocarbyle en $C_{1-10}$, et optionnellement deux groupes $R^1$ adjacents peuvent faire partie d'un cycle incluant les carbones de phényle auxquels ils sont liés,
les $R^2$ sont chacun indépendamment identiques ou peuvent être différents et sont un groupe $CH_2$-$R^8$, $R^8$ étant H ou un groupe alkyle en $C_{1-6}$ linéaire ou ramifié, un groupe cycloalkyle en $C_3$-$C_8$, un groupe aryle en $C_6$-$C_{10}$,
$R^3$ est un groupe alkyle en $C_1$-$C_6$ linéaire ou ramifié, un arylalkyle en $C_{7-20}$, un groupe alkylaryle en $C_{7-20}$ ou un groupe aryle en $C_6$-$C_{20}$,
$R^4$ est un groupe $C(R^9)_3$, $R^9$ étant un groupe alkyle en $C_1$-$C_6$ linéaire ou ramifié,
$R^5$ est un hydrogène ou un groupe hydrocarbyle en $C_1$-$C_{20}$ aliphatique contenant optionnellement un ou plusieurs hétéroatomes des groupes 14 à 16 du tableau périodique ;
$R^6$ est un hydrogène ou un groupe hydrocarbyle en $C_1$-$C_{20}$ aliphatique contenant optionnellement un ou plusieurs hétéroatomes des groupes 14 à 16 du tableau périodique ; ou
$R^5$ et $R^6$ peuvent être pris ensemble pour former un cycle carboné saturé à 5 chaînons qui est optionnellement substitué avec n groupes $R^{10}$, n allant de 0 à 4 ;
les $R^{10}$ sont chacun identiques ou différents et peuvent être un groupe hydrocarbyle en $C_1$-$C_{20}$, ou un groupe hydrocarbyle en $C_1$-$C_{20}$ contenant optionnellement un ou plusieurs hétéroatomes appartenant aux groupes 14 à 16 du tableau périodique ;
$R^7$ est H ou un groupe alkyle en $C_1$-$C_6$ linéaire ou ramifié ou un groupe aryle ou hétéroaryle ayant 6 à 20 atomes de carbone optionnellement substitué avec un à trois groupes $R^{11}$, les $R^{11}$ sont chacun indépendamment identiques ou peuvent être différents et sont un hydrogène, un groupe alkyle en $C_1$-$C_6$ linéaire ou ramifié, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$.

**15.** Article comprenant la composition (C) renforcée par des fibres selon l'une des revendications 1 à 14.

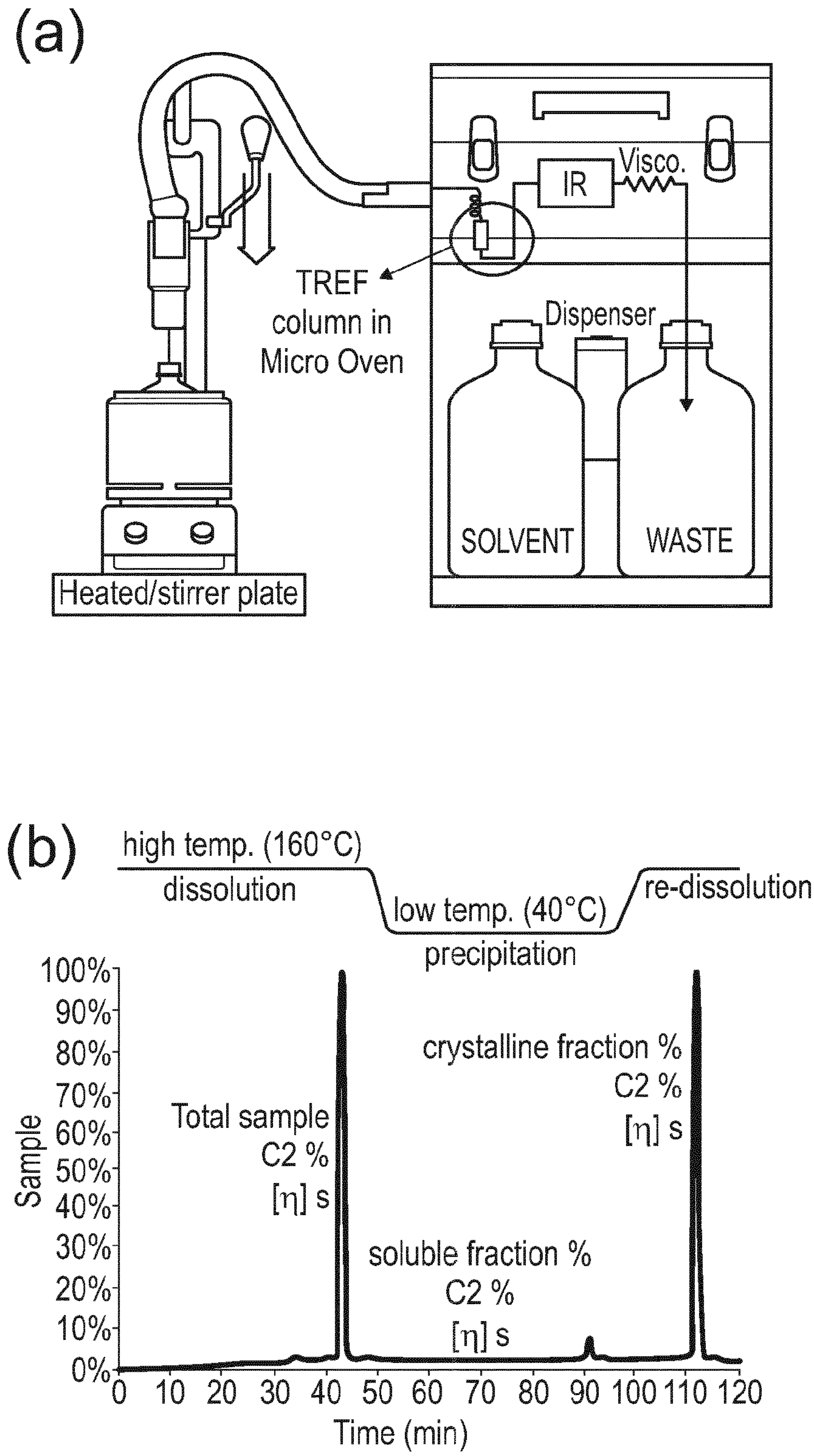
(a)
Visco.
IR
TREF
column in
Micro Oven
Dispenser
SOLVENT
WASTE
Heated/stirrer plate
(b)
high temp. (160°C)
dissolution
low temp. (40°C)
precipitation
re-dissolution
Sample
100%
90%
80%
70%
60%
50%
40%
30%
20%
10%
0%
Total sample
C2 %
[η] s
crystalline fraction %
C2 %
[η] s
soluble fraction %
C2 %
[η] s
0 10 20 30 40 50 60 70 80 90 100 110 120
Time (min)

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3495423 A1
- EP 0887379 A
- WO 9212182 A
- WO 9858976 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 9414856 A
- WO 9512622 A
- WO 2006097497 A
- US 5272236 A
- US 4506056 A
- US 4753997 A
- EP 1805238 A
- WO 2020239602 A1
- WO 2015121160 A1


### Non-patent literature cited in the description


- *Pure Appl. Chem*, 1996, vol. 68 (8), 1591-1595
- **HANS ZWEIFEL**. Plastic Additives Handbook. 2009, 1141-1190
- **BUSICO, V.** ; **CIPULLO, R.** *Prog. Polym. Sci.*, 2001, vol. 26, 443
- **BUSICO, V** ; **CIPULLO, R.** ; **MONACO, G** ; **VACATELLO, M.** ; **SEGRE, A.L.** *Macromolecules*, 1997, vol. 30, 6251
- **ZHOU, Z** ; **KUEMMERLE, R** ; **QIU, X** ; **REDWINE, D** ; **CONG, R** ; **TAHA, A** ; **BAUGH, D.** ; **WINNIFORD, B**. *J. Mag. Reson.*, 2007, vol. 187, 225
- **BUSICO, V.** ; **CARBONNIERE, P** ; **CIPULLO, R** ; **PELLECCHIA, R** ; **SEVERN, J.** ; **TALARICO, G.** *Macromol. Rapid Commun.*, 2007, vol. 28, 11289
- **BUSICO, V** ; **CIPULLO, R**. *Prog. Polym. Sci.*, 2001, vol. 26, 443
- **BUSICO, V.** ; **CIPULLO, R** ; **MONACO, G** ; **VACATELLO, M.** ; **SEGRE, A.L**. *Macromoleucles*, 1997, vol. 30, 6251
- **RESCONI, L** ; **CAVALLO, L.** ; **FAIT, A.** ; **PIEMONTESI, F.** *Chem. Rev.*, 2000, vol. 100, 1253
- **SINGH, G.** ; **KOTHARI, A** ; **GUPTA, V.** *Polymer Testing*, 2009, vol. 28 (5), 475
- **ZHOU, Z.** ; **KUEMMERLE, R.** ; **QIU, X** ; **REDWINE, D.** ; **CONG, R** ; **TAHA, A** ; **BAUGH, D.** ; **WINNIFORD, B**. *J. Mag. Reson.*, 2007, vol. 187, 225
- **BUSICO, V.** ; **CARBONNIERE, P** ; **CIPULLO, R** ; **PELLECCHIA, R** ; **SEVERN, J** ; **TALARICO, G.** *Macromol. Rapid Commun.*, 2007, vol. 28, 1128
- **CHENG, H. N.** *Macromolecules*, 1984, vol. 17, 1950
- **WANG, W-J** ; **ZHU, S.** *Macromolecules*, 2000, vol. 33, 1157
- **WANG, W-J.** ; **ZHU, S**. *Macromolecules*, 2000, vol. 33, 1157